# EUROPEAN PATENT APPLICATION

(11) **EP 4 815 590 A1**
(43) Date of publication of application: **30.09.2026**
(21) Application number: 23959152.2
(22) Date of filing: 22.11.2023
(51) Int. Cl.: H04W 72/04

(54) **DETERMINATION METHOD AND APPARATUS, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2023/133283
(87) International publication number: WO 2025/107178

(57) **Abstract**

Provided in the present disclosure are a determination method and apparatus, and a device and a storage medium. The method comprises: determining a trigger event, which is used for triggering a beam report corresponding to a first reference signal resource set, wherein at least one reference signal resource set is configured for a terminal, and the first reference signal resource set is any one or more of the at least one reference signal resource set. The method in the present disclosure ensures the accuracy and timeliness of beam reporting while reducing signaling overheads.

## Description

### FIELD

The present disclosure relates to the field of communication technologies, and in particular, to a determination method and apparatus, a communication device, a communication system, and a storage medium.

### BACKGROUND

In a communication system, to ensure coverage, a channel and/or a signal is generally transmitted and received based on a beam. Optionally, to ensure communication quality when transmitting and receiving a channel and/or a signal based on a beam, a terminal generally performs beam measurement and reports a beam report to a network device based on a beam measurement result, so that the network device may schedule a beam with high beam quality for transmitting and receiving a channel and/or a signal based on the beam measurement result in the beam report.

### SUMMARY

The present disclosure provides a determination method and apparatus, a communication device, a communication system, and a storage medium.

According to a first aspect of embodiments of the present disclosure, a determination method is provided. The method includes:
determining a trigger event, the trigger event being used for triggering a beam report corresponding to a first reference signal resource set, in which a terminal is configured with at least one reference signal resource set, and the first reference signal resource set is one or more of the at least one reference signal resource set.

According to a second aspect of embodiments of the present disclosure, a determination method is provided. The method includes:
configuring a trigger event, the trigger event being used for triggering a beam report corresponding to a first reference signal resource set, in which a network device configures at least one reference signal resource set for a terminal, and the first reference signal resource set is one or more of the at least one reference signal resource set.

According to a third aspect of embodiments of the present disclosure, a determination method is provided for a communication system, the communication system including a terminal and a network device. The method includes at least one of:
configuring, by the network device, a trigger event, the trigger event being used for triggering a beam report corresponding to a first reference signal resource set, the terminal is configured with at least one reference signal resource set, and the first reference signal resource set is one or more of the at least one reference signal resource set;
determining, by the terminal, the trigger event; and
in a case where the trigger event is satisfied, reporting, by the terminal, at least one beam report.

According to a fourth aspect of embodiments of the present disclosure, a terminal is provided. The terminal includes:
a processing module configured to determine a trigger event, the trigger event being used for triggering a beam report corresponding to a first reference signal resource set, the terminal is configured with at least one reference signal resource set, and the first reference signal resource set is one or more of the at least one reference signal resource set.

According to a fifth aspect of embodiments of the present disclosure, a network device is provided. The network device includes:
a sending module configured to configure a trigger event, the trigger event being used for triggering a beam report corresponding to a first reference signal resource set, a terminal is configured with at least one reference signal resource set, and the first reference signal resource set is one or more of the at least one reference signal resource set.

According to a sixth aspect of embodiments of the present disclosure, a communication device is provided. The communication device includes:
one or more processors,
in which the processor is configured to invoke instructions to cause the communication device to perform the determination method according to the first aspect or the second aspect.

According to a seventh aspect of embodiments of the present disclosure, a communication system is provided. The communication system includes a terminal and a network device, in which the terminal is configured to perform the determination method according to the first aspect, and the network device is configured to perform the determination method according to the second aspect.

According to an eighth aspect of embodiments of the present disclosure, a storage medium is provided. The storage medium stores instructions, in which when the instructions are executed on a communication device, the communication device is caused to perform the determination method according to the first aspect or the second aspect.

### BRIEF DESCRIPTION OF THE DRAWINGS

The above and/or additional aspects and advantages of the present disclosure become apparent and easily understood from the description of embodiments in conjunction with the accompanying drawings, in which:
FIG. 1 is a schematic block diagram of an architecture of a communication system according to an embodiment of the present disclosure.
FIG. 2A is an interaction schematic diagram of a determination method according to an embodiment of the present disclosure.
FIG. 3A-3B are flow schematic diagrams of a determination method according to a further embodiment of the present disclosure.
FIG. 4A-4B are flow schematic diagrams of a determination method according to a further embodiment of the present disclosure.
FIG. 5A is a flow schematic diagram of a determination method according to a further embodiment of the present disclosure.
FIG. 6A is a schematic block diagram of a terminal according to an embodiment of the present disclosure.
FIG. 6B is a schematic block diagram of a network device according to an embodiment of the present disclosure.
FIG. 7A is a schematic block diagram of a communication device according to an embodiment of the present disclosure.
FIG. 7B is a schematic block diagram of a chip according to an embodiment of the present disclosure.

### DETAILED DESCRIPTION

Embodiments of the present disclosure provide a determination method and apparatus, a communication device, a communication system, and a storage medium.

In a first aspect, embodiments of the present disclosure provide a determination method performed by a terminal. The method includes:
determining a trigger event, the trigger event being used for triggering a beam report corresponding to a first reference signal resource set, in which the terminal is configured with at least one reference signal resource set, and the first reference signal resource set is one or more of the at least one reference signal resource set.

In the above embodiments, the terminal determines the trigger event used for triggering the beam report corresponding to the first reference signal resource set. The present disclosure provides a determination method to determine the trigger event used for triggering the beam report corresponding to the first reference signal resource set, and when a beam quality of a beam corresponding to a reference signal resource in the first reference signal resource set changes, beam reporting may be performed timely based on the trigger event. This avoids a situation where "if a beam reporting interval configured by the network device is too short, optimal beams in two reports may be the same without change, wasting signaling; and if the beam reporting interval configured by the network device is too long, when the beam quality changes, beam reporting may not be performed because a reporting occasion is not arrived, affecting communication quality". The method of the present disclosure may reduce signaling overhead and also ensure timely reporting when the beam quality changes, guaranteeing communication quality. The method reduces signaling overhead while also ensuring accuracy and timeliness of the beam report corresponding to the first reference signal resource set.

In conjunction with some embodiments of the first aspect, in some embodiments, different reference signal resource sets correspond to different control resource set (CORESET) pool indexes, or different reference signal resource sets correspond to different transmission reception points (TRPs).

In the above embodiments, by making different reference signal resource sets correspond to different CORESET pool indexes or by making different reference signal resource sets correspond to different TRPs, when beam reporting is performed based on the first reference signal resource set, beam reporting may be performed on a per-TRP basis. The present disclosure provides a method for event-triggered beam report on a per-TRP basis, which may be applicable to a multi-transmission reception point (MTRP) scenario, ensuring that beam reporting in the MTRP scenario may be performed successfully. Furthermore, in the present disclosure, when a beam report is triggered by an event on a per-TRP basis, not only signaling overhead is reduced, but also timely reporting when a beam quality of a certain TRP changes is ensured, guaranteeing accuracy and timeliness of TRP-based beam reporting.

In conjunction with some embodiments of the first aspect, in some embodiments, the reference signal resource set includes at least one reference signal resource, and different reference signal resources correspond to different beams.

In the above embodiments, the specific concept of the reference signal resource set is defined, and then subsequent beam reporting based on the reference signal resource set may be performed successfully.

In conjunction with some embodiments of the first aspect, in some embodiments, determining the trigger event includes:
receiving first information, in which the first information indicates the trigger event.

In the above embodiments, a method for the terminal to determine the trigger event is provided, facilitating the terminal to successfully determine the trigger event. As such, the terminal may subsequently report the beam report timely and accurately based on the trigger event, and signaling overhead may be avoided.

In conjunction with some embodiments of the first aspect, in some embodiments, the trigger event includes at least one of:
a beam quality of a first beam in the first reference signal resource set being lower than a first threshold;
a beam quality of a second beam in the first reference signal resource set being higher than a second threshold;
a difference between the beam quality of the second beam in the first reference signal resource set and the beam quality of the first beam in the first reference signal resource set being greater than or equal to a third threshold;
at least one of current optimal K beams of the first reference signal resource set being different from optimal K beams of the first reference signal resource set reported in a last beam report by the terminal, K being a positive integer;
current optimal K beams of the first reference signal resource set not including optimal K beams of the first reference signal resource set reported in a last beam report;
current optimal K beams of the first reference signal resource set not including a beam recently indicated by a network device;
current optimal K beams of the first reference signal resource set not including a beam recently activated by a network device;
a difference between a beam quality of an i-th beam top ranked currently in the first reference signal resource set and a beam quality of a j-th beam top ranked in the first reference signal resource set reported in a last beam report being greater than or equal to a fourth threshold, i and j being positive integers, i being less than or equal to K, j being less than or equal to K; or
a difference between a beam quality of a worst beam currently in the first reference signal resource set and a beam quality of a worst beam in the first reference signal resource set reported in a last beam report being greater than or equal to a fifth threshold.

In conjunction with some embodiments of the first aspect, in some embodiments, the first beam is a beam reported by the terminal in the last beam report and/or a beam used by the terminal; and the second beam is a candidate beam.

In conjunction with some embodiments of the first aspect, in some embodiments, the first beam includes at least one of: an optimal beam in the last beam report; a beam recently indicated by the network device; a beam recently activated by the network device; all beams in the last beam report; or a worst beam in the last beam report; and
the second beam includes at least one of: a non-optimal beam in the last beam report; a beam other than beams in the last beam report; a beam other than the beam recently indicated by the network device; or a beam other than at least one beam recently activated by the network device.

In the above embodiments, the specific content of the trigger event is defined. As such, the terminal may subsequently report the beam report timely and accurately based on the trigger event, and signaling overhead may be avoided.

In conjunction with some embodiments of the first aspect, in some embodiments, determining the trigger event includes any one of:
receiving a first signaling, in which the first signaling is used for configuring the trigger event; or
receiving a first signaling and a second signaling, in which the first signaling is used for configuring at least one trigger event, and the second signaling is used for activating or triggering a trigger event among the at least one trigger event configured by the first signaling.

In conjunction with some embodiments of the first aspect, in some embodiments, receiving the first signaling and the second signaling includes:
receiving the first signaling and the second signaling;
in which the first signaling is used for configuring at least one of: at least one association relationship, an association identifier (ID) corresponding to an association relationship, a beam reporting type, a beam reporting manner, or beam group-related information; in which the association relationship includes an association relationship among the first reference signal resource set, a trigger event corresponding to the first reference signal resource set, and a beam measurement quantity corresponding to the first reference signal resource set; and
the second signaling indicates the association ID to activate or trigger the trigger event configured by the first signaling.

In conjunction with some embodiments of the first aspect, in some embodiments, association relationships corresponding to different first reference signal resource sets are independently configurable.

In conjunction with some embodiments of the first aspect, in some embodiments, the method further includes:
determining, by the terminal, a beam reporting manner and/or beam group-related information, and reporting, by the terminal, the beam reporting manner and/or the beam group-related information to a network device.

In conjunction with some embodiments of the first aspect, in some embodiments, the beam reporting type includes:
semi-persistent reporting; or
aperiodic reporting.

In conjunction with some embodiments of the first aspect, in some embodiments, the beam reporting manner includes:
group based beam reporting; or
non-group based beam reporting.

In conjunction with some embodiments of the first aspect, in some embodiments, a beam group includes at least two beams, and the beam group-related information indicates a usage of the at least two beams in the beam group, the usage including at least one of:
the at least two beams being used for the terminal to simultaneously perform uplink transmission; or
the at least two beams being used for the terminal to simultaneously perform downlink reception.

In the above embodiments, a method for the terminal to determine the trigger event is provided, facilitating the terminal to successfully determine the trigger event. As such, the terminal may subsequently report the beam report timely and accurately based on the trigger event, and signaling overhead may be avoided.

In conjunction with some embodiments of the first aspect, in some embodiments, the method further includes:
in a case where the trigger event is satisfied, reporting at least one beam report.

In conjunction with some embodiments of the first aspect, in some embodiments, the method further includes:
in a case where multiple beam reports are reported, determining a time interval between two adjacent beam reports; and
reporting the multiple beam reports based on the time interval.

In conjunction with some embodiments of the first aspect, in some embodiments, the beam report includes at least one of:
a beam quality of a beam corresponding to a serving cell of the terminal; or
a beam quality of a beam corresponding to a cell other than the serving cell of the terminal.

In conjunction with some embodiments of the first aspect, in some embodiments, the beam reporting manner is group based beam reporting, and the beam report includes at least one of:
second information, in which the second information indicates a number of reported beam groups;
a resource identifier of a reference signal resource corresponding to a beam in each reported beam group; or
a beam quality of a beam in each reported beam group.

In conjunction with some embodiments of the first aspect, in some embodiments, the beam reporting manner is non-group based beam reporting, and the beam report includes: a beam quality of a beam corresponding to a reference signal resource in the first reference signal resource set.

In conjunction with some embodiments of the first aspect, in some embodiments, reference signal resources corresponding to different beams in the beam group belong to different first reference signal resource sets.

In the above embodiments, a method for the terminal to report the beam report based on the trigger event is provided, and the terminal may successfully perform beam reporting based on the trigger event, reducing signaling overhead and also ensuring accuracy and timeliness of the beam report corresponding to the first reference signal resource set.

In conjunction with some embodiments of the first aspect, in some embodiments, the method further includes:
receiving third information, in which the third information is used for configuring a first request, and the first request is used for requesting a first resource, the first resource being used for carrying a beam report; and
sending the first request.

In conjunction with some embodiments of the first aspect, in some embodiments, the third information is further used for configuring first requests corresponding to different first reference signal resource sets, in which the first requests corresponding to different first reference signal resource sets are used for requesting first resources corresponding to the different first reference signal resource sets, the first resources corresponding to the different first reference signal resource sets are used for carrying beam reports of the different first reference signal resource sets, and the first resources corresponding to the different first reference signal resource sets are different or same.

In the above embodiments, the terminal first sends the first request based on the received third information to request the first resource for carrying the beam report, and the beam report may be successfully reported subsequently based on the requested first resource, ensuring successful beam reporting. Furthermore, the first resources corresponding to different first reference signals are different, in which different first reference signals correspond to different TRPs. As such, resources for carrying beam reports corresponding to different TRPs may be different, achieving independent reporting of beam reports corresponding to different TRPs, preventing mutual interference between beam reports corresponding to different TRPs, and ensuring stability and independence of beam reports corresponding to different TRPs.

In a second aspect, embodiments of the present disclosure provide a determination method performed by a network device. The method includes:
configuring a trigger event, the trigger event being used for triggering a beam report corresponding to a first reference signal resource set, in which the network device configures at least one reference signal resource set for a terminal, and the first reference signal resource set is one or more of the at least one reference signal resource set.

In the above embodiments, the network device configures the trigger event used for triggering the beam report corresponding to the first reference signal resource set. Thus, the present disclosure provides a determination method to determine the trigger event used for triggering the beam report corresponding to the first reference signal resource set, so that when a beam quality of a beam corresponding to a reference signal resource in the first reference signal resource set changes, beam reporting may be performed timely based on the trigger event. This avoids a situation where "if a beam reporting interval configured by the network device is too short, best beams in two reports may be the same without change, wasting signaling; and if the beam reporting interval configured by the network device is too long, when the beam quality changes, beam reporting may not be performed because a reporting occasion is not arrived, affecting communication quality". Therefore, the method of the present disclosure may reduce signaling overhead and also ensure timely reporting when the beam quality changes, guaranteeing communication quality. Thus, the method reduces signaling overhead while also ensuring accuracy and timeliness of the beam report corresponding to the first reference signal resource set.

In conjunction with some embodiments of the second aspect, in some embodiments, different reference signal resource sets correspond to different control resource set (CORESET) pool indexes, or different reference signal resource sets correspond to different transmission reception points (TRPs).

In conjunction with some embodiments of the second aspect, in some embodiments, the reference signal resource set includes at least one reference signal resource, and different reference signal resources correspond to different beams.

In conjunction with some embodiments of the second aspect, in some embodiments, configuring the trigger event includes:
sending first information, in which the first information indicates the trigger event.

In conjunction with some embodiments of the second aspect, in some embodiments, the trigger event includes at least one of:
a beam quality of a first beam in the first reference signal resource set being lower than a first threshold;
a beam quality of a second beam in the first reference signal resource set being higher than a second threshold;
a difference between the beam quality of the second beam in the first reference signal resource set and the beam quality of the first beam in the first reference signal resource set being greater than or equal to a third threshold;
at least one of current optimal K beams of the first reference signal resource set being different from optimal K beams of the first reference signal resource set reported in a last beam report by the terminal, K being a positive integer;
current optimal K beams of the first reference signal resource set not including optimal K beams of the first reference signal resource set reported in a last beam report;
current optimal K beams of the first reference signal resource set not including a beam recently indicated by a network device;
current optimal K beams of the first reference signal resource set not including a beam recently activated by a network device;
a difference between a beam quality of an i-th beam top ranked currently in the first reference signal resource set and a beam quality of a j-th beam top ranked in the first reference signal resource set reported in a last beam report being greater than or equal to a fourth threshold, i and j being positive integers, i being less than or equal to K, j being less than or equal to K; or
a difference between a beam quality of a worst beam currently in the first reference signal resource set and a beam quality of a worst beam in the first reference signal resource set reported in a last beam report being greater than or equal to a fifth threshold.

In conjunction with some embodiments of the second aspect, in some embodiments, the first beam is a beam reported by the terminal in the last beam report and/or a beam used by the terminal; and the second beam is a candidate beam.

In conjunction with some embodiments of the second aspect, in some embodiments, the first beam includes at least one of: an optimal beam in the last beam report; a beam recently indicated by the network device; a beam recently activated by the network device; all beams in the last beam report; or a worst beam in the last beam report; and
the second beam includes at least one of: a non-optimal beam in the last beam report; a beam other than beams in the last beam report; a beam other than the beam recently indicated by the network device; or a beam other than at least one beam recently activated by the network device.

In conjunction with some embodiments of the second aspect, in some embodiments, configuring the trigger event includes any one of:
sending a first signaling, in which the first signaling is used for configuring the trigger event; or
sending a first signaling and a second signaling, in which the first signaling is used for configuring at least one trigger event, and the second signaling is used for activating or triggering a trigger event among the at least one trigger event configured by the first signaling.

In conjunction with some embodiments of the second aspect, in some embodiments, sending the first signaling and the second signaling includes:
sending the first signaling and the second signaling;
in which the first signaling is used for configuring at least one of: at least one association relationship, an association identifier (ID) corresponding to an association relationship, a beam reporting type, a beam reporting manner, or beam group-related information; in which the association relationship includes an association relationship among the first reference signal resource set, a trigger event corresponding to the first reference signal resource set, and a beam measurement quantity corresponding to the first reference signal resource set; and
the second signaling indicates the association ID to activate or trigger the trigger event configured by the first signaling.

In conjunction with some embodiments of the second aspect, in some embodiments, association relationships corresponding to different first reference signal resource sets are independently configurable.

In conjunction with some embodiments of the second aspect, in some embodiments, the method further includes:
receiving, from the terminal, a beam reporting manner and/or beam group-related information reported by the terminal.

In conjunction with some embodiments of the second aspect, in some embodiments, the beam reporting type includes:
semi-persistent reporting; or
aperiodic reporting.

In conjunction with some embodiments of the second aspect, in some embodiments, the beam reporting manner includes:
group based beam reporting; or
non-group based beam reporting.

In conjunction with some embodiments of the second aspect, in some embodiments, a beam group includes at least two beams, and the beam group-related information indicates a usage of the at least two beams in the beam group, the usage including at least one of:
the at least two beams being used for the terminal to simultaneously perform uplink transmission; or
the at least two beams being used for the terminal to simultaneously perform downlink reception.

In conjunction with some embodiments of the second aspect, in some embodiments, the method further includes:
receiving at least one beam report from the terminal.

In conjunction with some embodiments of the second aspect, in some embodiments, the method further includes:
configuring, for the terminal, a time interval between two adjacent beam reports.

In conjunction with some embodiments of the second aspect, in some embodiments, the beam report includes at least one of:
a beam quality of a beam corresponding to a serving cell of the terminal; or
a beam quality of a beam corresponding to a cell other than the serving cell of the terminal.

In conjunction with some embodiments of the second aspect, in some embodiments, the beam reporting manner is group based beam reporting, and the beam report includes at least one of:
second information, in which the second information indicates a number of reported beam groups;
a resource identifier of a reference signal resource corresponding to a beam in each reported beam group; or
a beam quality of a beam in each reported beam group.

In conjunction with some embodiments of the second aspect, in some embodiments, the beam reporting manner is non-group based beam reporting, and the beam report includes: a beam quality of a beam corresponding to a reference signal resource in the first reference signal resource set.

In conjunction with some embodiments of the second aspect, in some embodiments, reference signal resources corresponding to different beams in the beam group belong to different first reference signal resource sets.

In conjunction with some embodiments of the second aspect, in some embodiments, the method further includes:
sending third information, in which the third information is used for configuring a first request, and the first request is used for requesting a first resource, the first resource being used for carrying a beam report; and
receiving the first request.

In conjunction with some embodiments of the second aspect, in some embodiments, the third information is further used for configuring first requests corresponding to different first reference signal resource sets, in which the first requests corresponding to different first reference signal resource sets are used for requesting first resources corresponding to the different first reference signal resource sets, the first resources corresponding to the different first reference signal resource sets are used for carrying beam reports of the different first reference signal resource sets, and the first resources corresponding to the different first reference signal resource sets are different or the same.

In a third aspect, embodiments of the present disclosure provide a determination method for a communication system, the communication system including a terminal and a network device. The method includes at least one of:
configuring, by the network device, a trigger event, the trigger event being used for triggering a beam report corresponding to a first reference signal resource set, in which the terminal is configured with at least one reference signal resource set, and the first reference signal resource set is one or more of the at least one reference signal resource set;
determining, by the terminal, the trigger event; and
in a case where the trigger event is satisfied, reporting, by the terminal, at least one beam report.

In a fourth aspect, embodiments of the present disclosure provide a terminal. The terminal includes:
a processing module configured to determine a trigger event, in which the trigger event is used for triggering a beam report corresponding to a first reference signal resource set, the terminal is configured with at least one reference signal resource set, and the first reference signal resource set is one or more of the at least one reference signal resource set.

In conjunction with some embodiments of the fourth aspect, in some embodiments, different reference signal resource sets correspond to different control resource set (CORESET) pool indexes, or different reference signal resource sets correspond to different transmission reception points (TRPs).

In conjunction with some embodiments of the fourth aspect, in some embodiments, the reference signal resource set includes at least one reference signal resource, and different reference signal resources correspond to different beams.

In conjunction with some embodiments of the fourth aspect, in some embodiments, the processing module is further configured to:
receive first information, in which the first information indicates the trigger event.

In conjunction with some embodiments of the fourth aspect, in some embodiments, the trigger event includes at least one of:
a beam quality of a first beam in the first reference signal resource set being lower than a first threshold;
a beam quality of a second beam in the first reference signal resource set being higher than a second threshold;
a difference between the beam quality of the second beam in the first reference signal resource set and the beam quality of the first beam in the first reference signal resource set being greater than or equal to a third threshold;
at least one of current optimal K beams of the first reference signal resource set being different from optimal K beams of the first reference signal resource set reported in a last beam report by the terminal, K being a positive integer;
current optimal K beams of the first reference signal resource set not including optimal K beams of the first reference signal resource set reported in the last beam report;
current optimal K beams of the first reference signal resource set not including a beam recently indicated by a network device;
current optimal K beams of the first reference signal resource set not including a beam recently activated by a network device;
a difference between a beam quality of an i-th beam top ranked currently in the first reference signal resource set and a beam quality of a j-th beam top ranked in the first reference signal resource set reported in a last beam report being greater than or equal to a fourth threshold, i and j being positive integers, i being less than or equal to K, j being less than or equal to K; or
a difference between a beam quality of a worst beam currently in the first reference signal resource set and a beam quality of a worst beam in the first reference signal resource set reported in a last beam report being greater than or equal to a fifth threshold.

In conjunction with some embodiments of the fourth aspect, in some embodiments, the first beam is a beam reported by the terminal in the last beam report and/or a beam used by the terminal; and the second beam is a candidate beam.

In conjunction with some embodiments of the fourth aspect, in some embodiments, the first beam includes at least one of: an optimal beam in the last beam report; a beam recently indicated by the network device; a beam recently activated by the network device; all beams in the last beam report; or a worst beam in the last beam report; and
the second beam includes at least one of: a non-optimal beam in the last beam report; a beam other than beams in the last beam report; a beam other than the beam recently indicated by the network device; or a beam other than at least one beam recently activated by the network device.

In conjunction with some embodiments of the fourth aspect, in some embodiments, the processing module is further configured to perform any one of:
receiving a first signaling, in which the first signaling is used for configuring the trigger event; or
receiving a first signaling and a second signaling, in which the first signaling is used for configuring at least one trigger event, and the second signaling is used for activating or triggering a trigger event among the at least one trigger event configured by the first signaling.

In conjunction with some embodiments of the fourth aspect, in some embodiments, the processing module is further configured to:
receive the first signaling and the second signaling;
in which the first signaling is used for configuring at least one of: at least one association relationship, an association identifier (ID) corresponding to an association relationship, a beam reporting type, a beam reporting manner, or beam group-related information; in which the association relationship includes an association relationship among the first reference signal resource set, a trigger event corresponding to the first reference signal resource set, and a beam measurement quantity corresponding to the first reference signal resource set; and
the second signaling indicates the association ID to activate or trigger the trigger event configured by the first signaling.

In conjunction with some embodiments of the fourth aspect, in some embodiments, association relationships corresponding to different first reference signal resource sets are independently configurable.

In conjunction with some embodiments of the fourth aspect, in some embodiments, the terminal is further configured to:
determine, by the terminal, a beam reporting manner and/or beam group-related information, and report, by the terminal, the beam reporting manner and/or the beam group-related information to a network device.

In conjunction with some embodiments of the fourth aspect, in some embodiments, the beam reporting type includes:
semi-persistent reporting; or
aperiodic reporting.

In conjunction with some embodiments of the fourth aspect, in some embodiments, the beam reporting manner includes:
group based beam reporting; or
non-group based beam reporting.

In conjunction with some embodiments of the fourth aspect, in some embodiments, a beam group includes at least two beams, and the beam group-related information indicates a usage of the at least two beams in the beam group, the usage including at least one of:
the at least two beams being used for the terminal to simultaneously perform uplink transmission; or
the at least two beams being used for the terminal to simultaneously perform downlink reception.

In conjunction with some embodiments of the fourth aspect, in some embodiments, the terminal is further configured to:
in a case where the trigger event is satisfied, report at least one beam report.

In conjunction with some embodiments of the fourth aspect, in some embodiments, the terminal is further configured to:
in a case where multiple beam reports are reported, determine a time interval between two adjacent beam reports; and
report the multiple beam reports based on the time interval.

In conjunction with some embodiments of the fourth aspect, in some embodiments, the beam report includes at least one of:
a beam quality of a beam corresponding to a serving cell of the terminal; or
a beam quality of a beam corresponding to a cell other than the serving cell of the terminal.

In conjunction with some embodiments of the fourth aspect, in some embodiments, the beam reporting manner is group based beam reporting, and the beam report includes at least one of:
second information, in which the second information indicates a number of reported beam groups;
a resource identifier of a reference signal resource corresponding to a beam in each reported beam group; or
a beam quality of a beam in each reported beam group.

In conjunction with some embodiments of the fourth aspect, in some embodiments, the beam reporting manner is non-group based beam reporting, and the beam report includes: a beam quality of a beam corresponding to a reference signal resource in the first reference signal resource set.

In conjunction with some embodiments of the fourth aspect, in some embodiments, reference signal resources corresponding to different beams in the beam group belong to different first reference signal resource sets.

In conjunction with some embodiments of the fourth aspect, in some embodiments, the terminal is further configured to:
receive third information, in which the third information is used for configuring a first request, and the first request is used for requesting a first resource, the first resource being used for carrying a beam report; and
send the first request.

In conjunction with some embodiments of the fourth aspect, in some embodiments, the third information is further used for configuring first requests corresponding to different first reference signal resource sets, in which the first requests corresponding to different first reference signal resource sets are used for requesting first resources corresponding to the different first reference signal resource sets, the first resources corresponding to the different first reference signal resource sets are used for carrying beam reports of the different first reference signal resource sets, and the first resources corresponding to the different first reference signal resource sets are different or same.

In a fifth aspect, embodiments of the present disclosure provides a network device. The network device includes:
a sending module configured to configure a trigger event, in which the trigger event is used for triggering a beam report corresponding to a first reference signal resource set, a terminal is configured with at least one reference signal resource set, and the first reference signal resource set is one or more of the at least one reference signal resource set.

In conjunction with some embodiments of the fifth aspect, in some embodiments, different reference signal resource sets correspond to different control resource set (CORESET) pool indexes, or different reference signal resource sets correspond to different transmission reception points (TRPs).

In conjunction with some embodiments of the fifth aspect, in some embodiments, the reference signal resource set includes at least one reference signal resource, and different reference signal resources correspond to different beams.

In conjunction with some embodiments of the fifth aspect, in some embodiments, the sending module is further configured to:
send first information, in which the first information indicates the trigger event.

In conjunction with some embodiments of the fifth aspect, in some embodiments, the trigger event includes at least one of:
a beam quality of a first beam in the first reference signal resource set being lower than a first threshold;
a beam quality of a second beam in the first reference signal resource set being higher than a second threshold;
a difference between the beam quality of the second beam in the first reference signal resource set and the beam quality of the first beam in the first reference signal resource set being greater than or equal to a third threshold;
at least one of current optimal K beams of the first reference signal resource set being different from optimal K beams of the first reference signal resource set reported in a last beam report by the terminal, K being a positive integer;
current optimal K beams of the first reference signal resource set not including optimal K beams of the first reference signal resource set reported in the last beam report;
current optimal K beams of the first reference signal resource set not including a beam recently indicated by a network device;
current optimal K beams of the first reference signal resource set not including a beam recently activated by a network device;
a difference between a beam quality of an i-th beam top ranked currently in the first reference signal resource set and a beam quality of a j-th beam top ranked in the first reference signal resource set reported in a last beam report being greater than or equal to a fourth threshold, i and j being positive integers, i being less than or equal to K, j being less than or equal to K; or
a difference between a beam quality of a worst beam currently in the first reference signal resource set and a beam quality of a worst beam in the first reference signal resource set reported in a last beam report being greater than or equal to a fifth threshold.

In conjunction with some embodiments of the fifth aspect, in some embodiments, the first beam is a beam reported by the terminal in the last beam report and/or a beam used by the terminal; and the second beam is a candidate beam.

In conjunction with some embodiments of the fifth aspect, in some embodiments, the first beam includes at least one of: an optimal beam in the last beam report; a beam recently indicated by the network device; a beam recently activated by the network device; all beams in the last beam report; or a worst beam in the last beam report; and
the second beam includes at least one of: a non-optimal beam in the last beam report; a beam other than beams in the last beam report; a beam other than the beam recently indicated by the network device; or a beam other than at least one beam recently activated by the network device.

In conjunction with some embodiments of the fifth aspect, in some embodiments, the sending module is further configured to perform any one of:
sending a first signaling, in which the first signaling is used for configuring the trigger event; or
sending a first signaling and a second signaling, in which the first signaling is used for configuring at least one trigger event, and the second signaling is used for activating or triggering a trigger event among the at least one trigger event configured by the first signaling.

In conjunction with some embodiments of the fifth aspect, in some embodiments, the sending module is further configured to:
send the first signaling and the second signaling;
in which the first signaling is used for configuring at least one of: at least one association relationship, an association identifier (ID) corresponding to an association relationship, a beam reporting type, a beam reporting manner, or beam group-related information; in which the association relationship includes an association relationship among the first reference signal resource set, a trigger event corresponding to the first reference signal resource set, and a beam measurement quantity corresponding to the first reference signal resource set; and
the second signaling indicates the association ID to activate or trigger the trigger event configured by the first signaling.

In conjunction with some embodiments of the fifth aspect, in some embodiments, association relationships corresponding to different first reference signal resource sets are independently configurable.

In conjunction with some embodiments of the fifth aspect, in some embodiments, the network device is further configured to:
receive, from the terminal, a beam reporting manner and/or beam group-related information reported by the terminal.

In conjunction with some embodiments of the fifth aspect, in some embodiments, the beam reporting type includes:
semi-persistent reporting; or
aperiodic reporting.

In conjunction with some embodiments of the fifth aspect, in some embodiments, the beam reporting manner includes:
group based beam reporting; or
non-group based beam reporting.

In conjunction with some embodiments of the fifth aspect, in some embodiments, a beam group includes at least two beams, and the beam group-related information indicates a usage of the at least two beams in the beam group, the usage including at least one of:
the at least two beams being used for the terminal to simultaneously perform uplink transmission; or
the at least two beams being used for the terminal to simultaneously perform downlink reception.

In conjunction with some embodiments of the fifth aspect, in some embodiments, the network device is further configured to:
receive at least one beam report from the terminal.

In conjunction with some embodiments of the fifth aspect, in some embodiments, the network device is further configured to:
configure, for the terminal, a time interval between two adjacent beam reports.

In conjunction with some embodiments of the fifth aspect, in some embodiments, the beam report includes at least one of:
a beam quality of a beam corresponding to a serving cell of the terminal; or
a beam quality of a beam corresponding to a cell other than the serving cell of the terminal.

In conjunction with some embodiments of the fifth aspect, in some embodiments, the beam reporting manner is group based beam reporting, and the beam report includes at least one of:
second information, in which the second information indicates a number of reported beam groups;
a resource identifier of a reference signal resource corresponding to a beam in each reported beam group; or
a beam quality of a beam in each reported beam group.

In conjunction with some embodiments of the fifth aspect, in some embodiments, the beam reporting manner is non-group based beam reporting, and the beam report includes: a beam quality of a beam corresponding to a reference signal resource in the first reference signal resource set.

In conjunction with some embodiments of the fifth aspect, in some embodiments, reference signal resources corresponding to different beams in the beam group belong to different first reference signal resource sets.

In conjunction with some embodiments of the fifth aspect, in some embodiments, the network device is further configured to:
send third information, in which the third information is used for configuring a first request, and the first request is used for requesting a first resource, the first resource being used for carrying a beam report; and
receive the first request.

In conjunction with some embodiments of the fifth aspect, in some embodiments, the third information is further used for configuring first requests corresponding to different first reference signal resource sets, in which the first requests corresponding to different first reference signal resource sets are used for requesting first resources corresponding to the different first reference signal resource sets, the first resources corresponding to the different first reference signal resource sets are used for carrying beam reports of the different first reference signal resource sets, and the first resources corresponding to the different first reference signal resource sets are different or the same.

In a sixth aspect, embodiments of the present disclosure provide a communication device. The communication device includes:
one or more processors; and a memory coupled to the one or more processors, the memory storing instructions; in which when the instructions are executed by the one or more processors, the communication device is caused to perform the determination method according to the first aspect or the second aspect.

In a seventh aspect, embodiments of the present disclosure provide a communication system. The communication system includes a terminal and a network device; in which the terminal is configured to perform the method according to the first aspect, and the network device is configured to perform the method according to the second aspect.

In an eighth aspect, embodiments of the present disclosure provide a storage medium. The storage medium stores instructions, in which when the instructions are executed on a communication device, the communication device is caused to perform the determination method according to the first aspect or the second aspect.

In a ninth aspect, embodiments of the present disclosure provide a program product. When executed by a communication device, the program product causes the communication device to perform the determination method according to the first aspect or the second aspect.

In a tenth aspect, embodiments of the present disclosure provide a computer program. When executed on a computer, the computer program causes the computer to perform the determination method according to the first aspect or the second aspect.

It is to be understood that the above terminal, network device, communication device, communication system, storage medium, program product, and computer program are all used to execute the methods proposed in embodiments of the present disclosure. Therefore, for the beneficial effects that may be achieved reference may be made to the corresponding beneficial effects in the methods, and details are not repeated here.

Embodiments of the present disclosure provide the title of the invention. In some embodiments, terms such as determination method, information processing method, information sending method, and information receiving method may be interchanged; terms such as communication apparatus, information processing apparatus, information sending apparatus, and information receiving apparatus may be interchanged; terms such as information processing system, communication system, information sending system, and information receiving system may be interchanged.

Embodiments of the present disclosure are not exhaustive, but are merely illustrations of some embodiments, and are not intended to limit the scope of protection of the present disclosure. In the absence of contradiction, each step in a certain embodiment may be implemented as an independent embodiment, and the steps may be arbitrarily combined. For example, a solution obtained by removing some steps from a certain embodiment may also be implemented as an independent embodiment, and the order of steps in a certain embodiment may be arbitrarily exchanged. Furthermore, optional implementations in a certain embodiment may be arbitrarily combined. Additionally, various embodiments may be arbitrarily combined. For example, some or all steps of different embodiments may be arbitrarily combined, and a certain embodiment may be arbitrarily combined with optional implementations of other embodiments.

In embodiments of the present disclosure, unless otherwise specified and unless logically contradictory, terms and/or descriptions among the various embodiments have consistency and may be mutually referenced, and technical features in different embodiments may be combined to form new embodiments according to their inherent logical relationships.

The terms used in embodiments of the present disclosure are only for the purpose of describing specific embodiments and are not intended to limit the present disclosure.

In embodiments of the present disclosure, unless otherwise specified, elements expressed in the singular, such as "a," "an," "the," "said," "above," "aforementioned," "this," may mean "one and only one," or "one or more," "at least one," etc. For example, in the case where an article such as "a," "an," or "the" is used in translation, the noun after the article may be understood as a singular expression or a plural expression.

In embodiments of the present disclosure, "multiple" means two or more.

In some embodiments, terms such as "at least one of," "at least one of," "at least one of," "one or more," "a plurality of," and "multiple" may be interchanged.

In embodiments of the present disclosure, descriptions such as "at least one of A, B, C...", "at least one of A and/or B and/or C...", etc., include the case where any one of A, B, C... exists alone, and also include the case where any combination of any number of A, B, C... exists, and each case may exist alone. For example, "at least one of A, B, and C" includes the cases of A alone, B alone, C alone, a combination of A and B, a combination of A and C, a combination of B and C, and a combination of A, B, and C. For example, "A and/or B" includes the cases of A alone, B alone, and a combination of A and B.

In some embodiments, descriptions such as "in one case A, in another case B", "in response to one case A, in response to another case B", etc., may include the following technical solutions depending on the case: performing A regardless of B, i.e., in some embodiments A; performing B regardless of A, i.e., in some embodiments B; selectively performing A or B, i.e., in some embodiments selecting to perform either A or B; performing both A and B, i.e., in some embodiments A and B. Similar applies when there are more branches such as A, B, C, etc.

Prefix words such as "first," "second" in embodiments of the present disclosure are only used to distinguish different description objects, and do not impose restrictions on the position, order, priority, quantity, or content of the description objects. The statements of the description objects refer to the claims or the context of the embodiments, and should not be construed as unnecessary limitation due to the use of prefix words. For example, if the description object is "field," the ordinal numbers before "field" in "first field" and "second field" do not limit the position or order between the "fields," and "first" and "second" do not limit whether the "fields" they modify are in the same message, nor do they limit the order of the "first field" and "second field." For another example, if the description object is "level," the ordinal numbers before "level" in "first level" and "second level" do not limit the priority between the "levels." For another example, the number of description objects is not limited by the ordinal numbers, and may be one or more. Taking "first apparatus" as an example, the number of "apparatuses" may be one or more. Furthermore, objects modified by different prefix words may be the same or different. For example, if the description object is "apparatus," "first apparatus" and "second apparatus" may be the same apparatus or different apparatuses, and the types thereof may be the same or different. For another example, if the description object is "information," "first information" and "second information" may be the same information or different information, and the content thereof may be the same or different.

In some embodiments, "include A," "contain A," "used for indicating A," "carrying A" may be interpreted as directly carrying A, or indirectly indicating A.

In some embodiments, terms such as "in response to...", "in response to determining...", "in a case where...", "at the time of...", "when...", "if...", "if" may be interchanged.

In some embodiments, terms such as "greater than," "greater than or equal to," "not less than," "more than," "more than or equal to," "not less than," "higher than," "higher than or equal to," "not lower than," "above" may be interchanged, and terms such as "smaller than," "smaller than or equal to," "not greater than," "less than," "less than or equal to," "not more than," "lower than," "lower than or equal to," "not higher than," "below" may be interchanged.

In some embodiments, an apparatus may be interpreted as being physical or virtual, and the name thereof is not limited to the name recorded in the embodiments. Terms such as "apparatus," "equipment," "device," "circuit," "network element," "node," "function," "unit," "section," "system," "network," "chip," "chip system," "entity," "subject" may be interchanged.

In some embodiments, "network" may be interpreted as a device included in the network (e.g., an access network device, a core network device, etc.).

In some embodiments, terms such as "access network device," "radio access network device," "base station," "radio base station," "fixed station," "node," "access point," "transmission point," "reception point," "transmission/reception point," "panel," "antenna panel," "antenna array," "cell," "macro cell," "small cell," "femto cell," "pico cell," "sector," "cell group," "carrier," "component carrier," "bandwidth part (BWP)" may be interchanged.

In some embodiments, terms such as "terminal," "terminal device," "user equipment (UE)," "user terminal," "mobile station," "mobile terminal," "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" may be interchanged.

In some embodiments, an access network device, a core network device, or a network device may be replaced with a terminal. For example, the structures of embodiments of the present disclosure may also be applied to a configuration in which communication between an access network device, a core network device, or a network device and a terminal is replaced with communication between multiple terminals (e.g., device-to-device (D2D), vehicle-to-everything (V2X), etc.). In this case, the terminal may be configured to have all or part of the functions of the access network device. Furthermore, terms such as "uplink," "downlink" may be replaced with terms corresponding to inter-terminal communication (e.g., "sidelink"). For example, an uplink channel, a downlink channel, etc. may be replaced with a sidelink channel, and an uplink, a downlink, etc. may be replaced with a sidelink.

In some embodiments, a terminal may be replaced with an access network device, a core network device, or a network device. In this case, the access network device, the core network device, or the network device may be configured to have all or part of the functions of the terminal.

In some embodiments, the acquisition of data, information, etc. may comply with the laws and regulations of the country in which the acquisition is performed.

In some embodiments, data, information, etc. may be acquired after obtaining user consent.

Furthermore, each element, each row, or each column in the tables of embodiments of the present disclosure may be implemented as an independent embodiment, and any combination of any elements, any rows, or any columns may also be implemented as an independent embodiment.

The correspondences shown in the present disclosure may be configured or predefined. The values of the information in each table are merely examples and may be configured as other values, and the present disclosure is not limited to this. When configuring the correspondences between the configuration information and the parameters, it is not necessarily required to configure all the correspondences shown in the tables. For example, some correspondences shown in the tables of the present disclosure may not be configured. For another example, appropriate modifications, such as splitting, merging, etc., may be made based on the above tables. The names of the parameters shown in the headings of the above tables may be other names understandable by a communication device, and the values or representation methods of the parameters may be other values or representation methods understandable by the communication device. When implementing the above tables, other data structures, such as an array, a queue, a container, a stack, a linear table, a pointer, a linked list, a tree, a graph, a structure, a class, a heap, a hash table, or a hash map, may also be used.

Predefined in the present disclosure may be understood as defined, predefined, stored, prestored, pre-negotiated, pre-configured, solidified, or pre-burned.

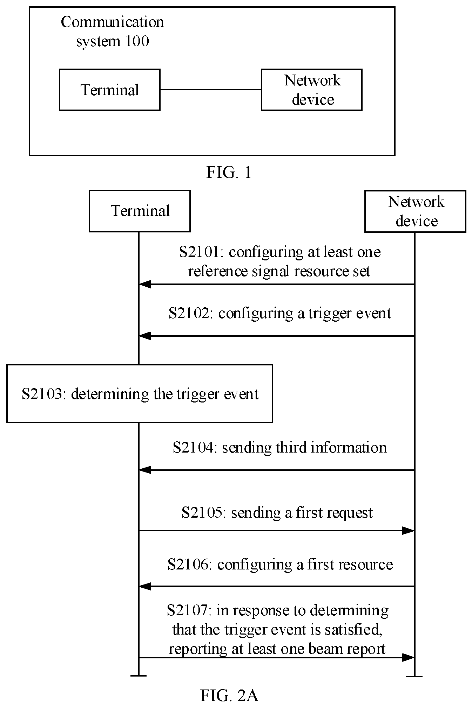

FIG. 1 is a schematic block diagram of a communication system according to an embodiment of the present disclosure. As shown in FIG. 1, a communication system 100 may include a terminal and a network device. Optionally, the above network device may include at least one of an access network device and a core network device.

In some embodiments, a terminal includes, for example, at least one of a mobile phone, a wearable device, an Internet of Things device, a car with communication capability, a smart car, a tablet computer, a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, a wireless terminal device in a smart home, but is not limited to this.

In some embodiments, an access network device is, for example, a node or device that accesses a terminal to a wireless network, and the access network device may include at least one of an evolved NodeB (eNB) in a 5G communication system, a next generation eNB (ng-eNB), a next generation NodeB (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, an access node in a wireless fidelity (Wi-Fi) system, but is not limited to this.

In some embodiments, the technical solutions of the present disclosure may be applicable to an Open RAN architecture. In this case, the interfaces between or within the access network devices referred to in embodiments of the present disclosure may become internal interfaces of Open RAN, and the processes and information exchange between these internal interfaces may be implemented through software or programs.

In some embodiments, an access network device may be composed of a central unit (CU) and a distributed unit (DU), in which the CU may also be referred to as a control unit. With a CU-DU structure, the protocol layers of the access network device may be split, some protocol layer functions are placed in the CU for centralized control, and part or all of the remaining protocol layer functions are distributed in the DU, with the DU being centrally controlled by the CU, but is not limited to this.

In some embodiments, a core network device may be a single device, including one or more network elements, or may be multiple devices or device groups, respectively including all or part of one or more network elements. A network element may be virtual or physical. The core network includes, for example, at least one of an evolved packet core (EPC), a 5G core network (5GCN), and a next generation core (NGC). Alternatively, the core network device may be a location management function network element. For example, a location management function network element includes a location server, which may be implemented as any of the following: a location management function (LMF), an enhanced serving mobile location center (E-SMLC), a secure user plane location (SUPL), and a secure user plane location platform (SUPL location platform, SUPLL).

It is to be understood that the communication system described in embodiments of the present disclosure is for the purpose of more clearly illustrating the technical solutions of embodiments of the present disclosure, and does not constitute a limitation on the technical solutions proposed in embodiments of the present disclosure. A person of ordinary skill in the art will know that as the system architecture evolves and new business scenarios emerge, the technical solutions proposed in embodiments of the present disclosure are equally applicable to similar technical problems.

The following embodiments of the present disclosure may be applied to the communication system 100 shown in FIG. 1, or a part thereof, but are not limited to this. The various components shown in FIG. 1 are illustrative, and the communication system may include all or part of the components in FIG. 1, or may include other components not shown in FIG. 1. The number and shape of each component are arbitrary, and the connection relationships between the components are illustrative. The components may be connected or not connected, the connection may be in any manner, may be direct or indirect, and may be wired or wireless.

Embodiments of the present disclosure may be applied to long term evolution (LTE), LTE-advanced (LTE-A), LTE-beyond (LTE-B), SUPER 3G, IMT-advanced, 4th generation mobile communication system (4G), 5th generation mobile communication system (5G), 5G new radio (NR), future radio access (FRA), new radio access technology (New-Radio Access Technology, RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (Bluetooth (registered trademark)), public land mobile network (PLMN) network, device-to-device (D2D) system, machine to machine (M2M) system, Internet of Things (IoT) system, vehicle-to-everything (V2X), systems using other determination methods, and next-generation systems extended based on them. Furthermore, multiple systems may be combined (e.g., LTE or LTE-A combined with 5G, etc.) for application.

Optionally, in a communication system, when a terminal reports a beam report to a network device, the network device usually first configures a reporting occasion for the beam report to the terminal, and then the terminal reports the beam report based on the reporting occasion configured by the network device. Optionally, the network device usually configures the terminal to report the beam report periodically, semi-persistently, or aperiodically. However, in practice, the beam quality change is best known to the terminal in a timely manner, and the reporting occasion configured by the network device (such as the period length for periodic reporting or the aperiodic reporting occasion) may not be the most appropriate. For example, if the reporting interval is too short, the best beams in two reports may be the same without change, wasting signaling; if the reporting interval is too long, when the beam quality changes, the reporting may not be performed because the reporting occasion is not arrived, affecting communication quality. Currently, it is proposed to trigger a beam report by an event to solve the above problems. However, currently a beam report is triggered on a cell basis, which is not suitable for a multi-transmission reception point (MTRP) scenario. In an MTRP scenario, how to trigger a beam report on a per-TRP basis by an event is an urgent problem to be solved.

FIG. 2A is an interaction schematic diagram of a determination method according to an embodiment of the present disclosure. As shown in FIG. 2A, an embodiment of the present disclosure relates to a determination method for a communication system 100. The method includes:
Step 2101: a network device configures at least one reference signal resource set.

Optionally, a reference signal resource set may include at least one reference signal resource, and different reference signal resources may correspond to different beams. Optionally, a reference signal resource in the reference signal resource set may be used for beam measurement. For example, the reference signal resource may be a channel measurement resource (CMR) and/or an interference measurement resource (IMR), in which the reference signal resource may be transmitted periodically, semi-persistently, or aperiodically.

Optionally, different reference signal resource sets may correspond to different control resource set (CORESET) pool indexes, or different reference signal resource sets may correspond to different transmission reception points (TRPs) (i.e., reference signal resources in different reference signal resource sets are transmitted by different TRPs). Optionally, different TRPs corresponding to different reference signal resource sets may all belong to a serving cell of the terminal, or some of the reference signal resource sets may correspond to TRPs belonging to the serving cell, and other reference signal resource sets may correspond to TRPs belonging to a cell different from the serving cell, such as a neighbor cell.

Optionally, the network device may configure the at least one reference signal resource set for the terminal, and the terminal may receive the at least one reference signal resource set configured by the network device.

Step 2102: the network device configures a trigger event.

Optionally, in some embodiments, the trigger event may be used for triggering a beam report corresponding to a first reference signal resource set. Optionally, the first reference signal resource set may be one or more of the at least one reference signal resource set configured by the network device. Optionally, "the trigger event is used for triggering a beam report corresponding to a first reference signal resource set" may be understood as: when the first reference signal resource set satisfies the trigger event, the terminal triggers a beam report (i.e., the terminal reports a beam report to the network device). The beam report may include a beam measurement result of the terminal for beams corresponding to reference signal resources in the first reference signal resource set, and the network device may schedule a beam with high beam quality for channel and/or signal transmission and reception based on the beam measurement result in the beam report. Optionally, the channel may include a physical downlink control channel (PDCCH), a physical downlink shared channel (PDSCH), a physical uplink shared channel (PUSCH), a physical uplink control channel (PUCCH); the signal may include a channel state information reference signal (CSI-RS), a sounding reference signal (SRS).

Optionally, in some embodiments, the trigger event may refer to an event that "a beam quality of a beam corresponding to a reference signal resource in the first reference signal resource set changes". Optionally, the trigger event may include, for example, at least one of:
a beam quality of a first beam in the first reference signal resource set being lower than a first threshold; optionally, the first beam may be a beam reported by the terminal in a last beam report and/or a beam currently used by the terminal; optionally, the first beam may include at least one of: an optimal beam in the last beam report, a beam recently indicated by the network device, a beam recently activated by the network device, all beams in the last beam report, or a worst beam in the last beam report;
a beam quality of a second beam in the first reference signal resource set being higher than a second threshold; optionally, the second beam may be a candidate beam; optionally, the second beam may include at least one of: a non-optimal beam in the last beam report, a beam other than beams in the last beam report, a beam other than the beam recently indicated by the network device, or a beam other than at least one beam recently activated by the network device;
a difference between the beam quality of the second beam in the first reference signal resource set and the beam quality of the first beam in the first reference signal resource set being greater than or equal to a third threshold;
at least one of current optimal K beams of the first reference signal resource set being different from optimal K beams of the first reference signal resource set reported in a last beam report by the terminal, K being a positive integer;
current optimal K beams of the first reference signal resource set not including optimal K beams of the first reference signal resource set reported in a last beam report;
current optimal K beams of the first reference signal resource set not including a beam recently indicated by a network device;
current optimal K beams of the first reference signal resource set not including a beam recently activated by a network device;
a difference between a beam quality of an i-th beam top ranked currently in the first reference signal resource set and a beam quality of a j-th beam top ranked in the first reference signal resource set reported in a last beam report being greater than or equal to a fourth threshold, i and j being positive integers, i being less than or equal to K, j being less than or equal to K; or
a difference between a beam quality of a worst beam currently in the first reference signal resource set and a beam quality of a worst beam in the first reference signal resource set reported in a last beam report being greater than or equal to a fifth threshold.

Optionally, the above beam quality may be, for example, layer 1 reference signal received power (L1-RSRP) and/or layer 1 signal to interference plus noise ratio (L1-SINR).

Optionally, the above "beam recently indicated by a network device" may be, for example, a beam recently indicated by the network device using downlink control information (DCI) signaling; optionally, the above "beam recently activated by a network device" may be, for example, a beam recently activated by the network device using medium access control control element (MAC CE) signaling. Specifically, in some embodiments, the network device usually first activates, through MAC CE signaling, at least one transmission configuration indication (TCI) state corresponding to at least one codepoint in an indication field of DCI signaling (e.g., a TCI indication field). When the MAC CE signaling activates at least one TCI state corresponding to one codepoint, the terminal may directly use a beam corresponding to the at least one TCI state corresponding to the activated codepoint to transmit and receive a channel and/or a signal; when the MAC CE signaling activates at least one TCI state corresponding to multiple codepoints, the network device further needs to indicate one codepoint among the activated multiple codepoints through DCI signaling, and then the terminal may transmit and receive a channel and/or a signal based on a beam corresponding to the TCI state corresponding to the codepoint indicated by the DCI signaling. Based on this, in some embodiments, the above "beam recently indicated by a network device" may be, for example, a beam corresponding to a TCI state corresponding to a codepoint recently indicated by the network device using DCI signaling, and the above "beam recently activated by a network device" may be, for example, a beam corresponding to a TCI state corresponding to a codepoint recently activated by the network device using MAC CE signaling. The channel may include a PDCCH, a PDSCH, a PUSCH, a PUCCH; the signal may include a CSI-RS, an SRS. The TCI state may include at least one of a joint TCI state, a downlink (DL) TCI state, an uplink (UL) TCI state, a TCI state, and spatial relation info.

Optionally, in some embodiments, a method for the network device to configure the trigger event may be, for example: the network device sends first information, and the first information may indicate the trigger event.

In other embodiments, a method for the network device to configure the trigger event may be, for example: the network device sends a first signaling, and the first signaling may be used for configuring the trigger event. Optionally, the first signaling may be, for example, radio resource control (RRC) signaling.

In yet other embodiments, a method for the network device to configure the trigger event may be, for example: the network device sends a first signaling and a second signaling. Optionally, the first signaling may be used for configuring at least one trigger event, and the second signaling may be used for activating or triggering a trigger event among the at least one trigger event configured by the first signaling. Optionally, the first signaling may be, for example, RRC signaling, and the second signaling may be, for example, DCI signaling and/or MAC CE signaling.

Optionally, a method for the first signaling to configure at least one trigger event may include: the first signaling may be used to configure at least one of: at least one association relationship, an association identifier (ID) corresponding to an association relationship, a beam reporting type, a beam reporting manner, and beam group-related information; in which the association relationship may include an association relationship among the first reference signal resource set, a trigger event corresponding to the first reference signal resource set, and a beam measurement quantity corresponding to the first reference signal resource set. Optionally, the beam measurement quantity may be, for example, L1-RSRP and/or L1-SINR. Optionally, when a certain first reference signal resource set has an association relationship with a certain trigger event and a beam measurement quantity, the terminal may perform beam measurement on beams corresponding to reference signal resources in the first reference signal resource set based on the beam measurement quantity to obtain a beam measurement result, and when the beam measurement result satisfies the trigger event associated with the first reference signal resource set, trigger a beam report corresponding to the first reference signal resource set (i.e., the terminal reports the beam report corresponding to the first reference signal resource set to the network device), and the beam report may include the beam measurement result.

It should be noted that, in some embodiments, association relationships corresponding to different first reference signal resource sets may be independently configured. For example, different first signaling may be used to configure the association relationships corresponding to different first reference signal resource sets.

Optionally, the beam reporting type may include: semi-persistent reporting or aperiodic reporting. The terminal may subsequently perform beam reporting based on the beam reporting type configured by the network device.

Optionally, the above beam reporting manner may include: group based beam reporting or non-group based beam reporting. Optionally, "group based beam reporting" may be understood as: reporting beam qualities of a beam group on a per-beam-group basis. Optionally, a beam group may include at least two beams, in which reference signal resources corresponding to different beams in the beam group belong to different first reference signal resource sets. Optionally, "non-group based beam reporting" may be understood as: reporting beam qualities of a beam on a per-beam basis. The terminal may subsequently perform beam reporting based on the beam reporting manner configured by the network device.

Optionally, the beam group-related information may be used for indicating a usage of at least two beams in a beam group, and the usage may include at least one of: the at least two beams being used for the terminal to simultaneously perform uplink transmission, or the at least two beams being used for the terminal to simultaneously perform downlink reception.

It should also be noted that, in some embodiments, the beam reporting manner and beam group-related information may not be configured to the terminal by the network device, but may also be determined by the terminal itself and then reported to the network device.

Optionally, a method for the second signaling to activate or trigger the trigger event among the at least one trigger event configured by the first signaling may include: the second signaling indicates the association ID corresponding to the association relationship to activate or trigger the trigger event configured by the first signaling. For example, assume that the association relationships configured by the first signaling include: association relationship #1: an association relationship among first reference signal resource set #1, trigger event #1, and beam measurement quantity #1, and the association ID corresponding to association relationship #1 is 1; association relationship #2: an association relationship among first reference signal resource set #2, trigger event #2, and beam measurement quantity #2, and the association ID corresponding to association relationship #2 is 2. If the association ID indicated by the second signaling is 2, it indicates that the network device activates or triggers association relationship #2. At this time, the terminal may measure beams corresponding to reference signal resources in first reference signal resource set #2 based on beam measurement quantity #2 (i.e., measure L1-RSRP and/or L1-SINR of beams corresponding to reference signal resources in first reference signal resource set #2 to obtain a beam measurement result), and when the beam measurement result of the beams corresponding to the reference signal resources in first reference signal resource set #2 satisfies trigger event #2, the terminal performs a beam report corresponding to first reference signal resource set #2.

It should be noted that, in some embodiments, when the second signaling is DCI signaling, a channel state information (CSI) request field in the DCI signaling may be directly reused or extended to activate or trigger the trigger event among the at least one trigger event configured by the first signaling. For example, the CSI request field in the DCI signaling may be directly reused to indicate the association ID, or the CSI request field in the DCI signaling may be extended to indicate the association ID.

Step 2103: the terminal determines the trigger event.

For a detailed description of the trigger event, reference may be made to the above step description.

Optionally, a method for the terminal to determine the trigger event may include at least one of:
receiving first information, in which the first information indicates the trigger event;
receiving a first signaling, in which the first signaling is used for configuring the trigger event; or
receiving a first signaling and a second signaling, in which the first signaling is used for configuring at least one trigger event, and the second signaling is used for activating or triggering the trigger event among the at least one trigger event configured by the first signaling.

For a detailed description of this part, reference may be made to the above step description.

Step 2104: the network device sends third information.

Optionally, in some embodiments, the third information may be used for configuring a first request, and the first request may be used for requesting a first resource, and the first resource may be used for carrying a beam report. Optionally, the first request may be, for example, a scheduling request (SR), and the first resource may be, for example, a physical uplink shared channel (PUSCH) resource.

It should be noted that, in some embodiments, the third information may be used for configuring first requests corresponding to different first reference signal resource sets, in which the first requests corresponding to different first reference signal resource sets may be used for requesting first resources corresponding to the different first reference signal resource sets, the first resources corresponding to the different first reference signal resource sets may be used for carrying beam reports of the different first reference signal resource sets, and the first resources corresponding to the different first reference signal resource sets may be different or the same. Alternatively, the third information may configure a first request, and the first request may correspond to multiple first reference signal resource sets, i.e., the first request corresponding to different first reference signal resource sets is the same, and the first resource requested by the first request may be used for carrying beam reports of multiple first reference signal resource sets.

Optionally, "the third information is used for configuring a first request" may be understood as: the third information is used for configuring a time-frequency resource, a sequence, etc. of the first request.

Optionally, the network device may send the third information to the terminal, and the terminal may receive the third information.

Step 2105: the terminal sends the first request.

Optionally, the terminal may send the first request based on the third information.

Optionally, when the terminal determines that the first reference signal resource set satisfies the trigger event, the terminal may send the first request corresponding to the first reference signal resource set satisfying the trigger event.

Optionally, the terminal may send the first request to the network device, and the network device may receive the first request.

Step 2106: the network device configures the first resource.

Step 2107: the terminal determines that the trigger event is satisfied, and reports at least one beam report.

Optionally, when the terminal determines that the first reference signal resource set satisfies the trigger event, the terminal may report at least one beam report. Optionally, the terminal may use the first resource corresponding to the first reference signal resource set to carry the beam report.

Optionally, in some embodiments, when the terminal reports multiple beam reports, the terminal may determine a time interval between two adjacent beam reports, and perform reporting of the multiple beam reports based on the time interval. Optionally, the time interval may be configured to the terminal by the network device, such as the network device configuring the time interval to the terminal through at least one of the first information, the first signaling, or the second signaling, or the network device may also configure the time interval through signaling other than the first information, the first signaling, and the second signaling, or the time interval may also be predefined by a protocol.

Optionally, in some embodiments, the beam report may include at least one of:
a beam quality of a beam corresponding to a serving cell of the terminal; or
a beam quality of a beam corresponding to a cell other than the serving cell of the terminal (e.g., a neighbor cell).

Optionally, when the beam report includes a beam quality of a beam corresponding to a cell other than the serving cell of the terminal, the beam report may further include a physical cell identifier (PCI) of the cell other than the serving cell of the terminal, in which the PCI may be configured to the terminal by the network device, such as the network device configuring the PCI to the terminal through at least one of the first information, the first signaling, or the second signaling, or the network device may also configure the PCI through signaling other than the first information, the first signaling, and the second signaling.

Optionally, in some embodiments, when the beam reporting manner is group based beam reporting, the beam report may include at least one of:
second information, in which the second information indicates a number of reported beam groups;
a resource identifier of a reference signal resource corresponding to a beam in each reported beam group; or
a beam quality of a beam in each reported beam group.

Optionally, in some embodiments, when the beam reporting manner is non-group based beam reporting, the beam report may include: a beam quality of a beam corresponding to a reference signal resource in the first reference signal resource set.

In the above embodiments, the terminal determines the trigger event used for triggering the beam report corresponding to the first reference signal resource set. Thus, the present disclosure provides a determination method to determine the trigger event used for triggering the beam report corresponding to the first reference signal resource set, so that when a beam quality of a beam corresponding to a reference signal resource in the first reference signal resource set changes, beam reporting may be performed timely based on the trigger event. This avoids a situation where "if a beam reporting interval configured by the network device is too short, best beams in two reports may be the same without change, wasting signaling; and if the beam reporting interval configured by the network device is too long, when the beam quality changes, beam reporting may not be performed because a reporting occasion is not arrived, affecting communication quality". Therefore, the method of the present disclosure may reduce signaling overhead and also ensure timely reporting when the beam quality changes, guaranteeing communication quality. Thus, the method reduces signaling overhead while also ensuring accuracy and timeliness of the beam report corresponding to the first reference signal resource set.

The determination method involved in embodiments of the present disclosure may include at least one of steps S2101 to S2107. For example, step S2101 may be implemented as an independent embodiment, step S2102 may be implemented as an independent embodiment, step S2103 may be implemented as an independent embodiment, and step S2101+S2102 may be implemented as an independent embodiment, but is not limited to this.

In the present implementation or embodiments, in the absence of contradiction, each step may be implemented independently, arbitrarily combined, or interchanged in order, and optional manners or optional examples may be arbitrarily combined, and may be arbitrarily combined with any steps of other implementations or other embodiments.

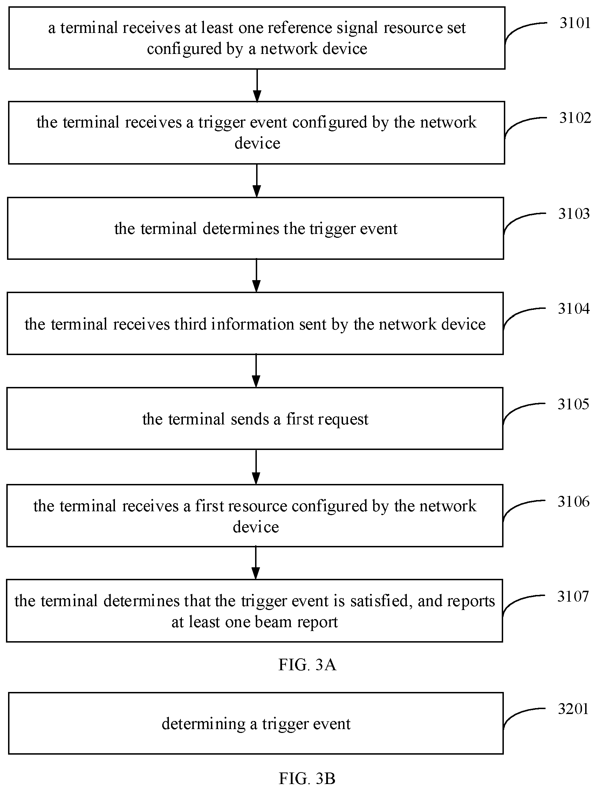

FIG. 3A is an interaction schematic diagram of a determination method according to an embodiment of the present disclosure. As shown in FIG. 3A, an embodiment of the present disclosure relates to a determination method for a terminal. The method includes:
Step 3101: a terminal receives at least one reference signal resource set configured by a network device.
Step 3102: the terminal receives a trigger event configured by the network device.
Step 3103: the terminal determines the trigger event.
Step 3104: the terminal receives third information sent by the network device.
Step 3105: the terminal sends a first request.
Step 3106: the terminal receives a first resource configured by the network device.
Step 3107: the terminal determines that the trigger event is satisfied, and reports at least one beam report.

For a detailed description of steps 3101-3107, reference may be made to the description in the above embodiments.

The determination method involved in embodiments of the present disclosure may include at least one of steps S3101 to S3107. For example, step S3101 may be implemented as an independent embodiment, step S3102 may be implemented as an independent embodiment, and step S3101+S3102 may be implemented as an independent embodiment, but is not limited to this.

In the present implementation or embodiments, in the absence of contradiction, each step may be implemented independently, arbitrarily combined, or interchanged in order, and optional manners or optional examples may be arbitrarily combined, and may be arbitrarily combined with any steps of other implementations or other embodiments.

FIG. 3B is an interaction schematic diagram of a determination method according to an embodiment of the present disclosure. As shown in FIG. 3B, an embodiment of the present disclosure relates to a determination method for a terminal. The method includes:
Step 3201: a trigger event is determined.

Optionally, the trigger event is used for triggering a beam report corresponding to a first reference signal resource set, in which the terminal is configured with at least one reference signal resource set, and the first reference signal resource set is one or more of the at least one reference signal resource set.

Optionally, different reference signal resource sets correspond to different control resource set (CORESET) pool indexes, or different reference signal resource sets correspond to different transmission reception points (TRPs).

Optionally, the reference signal resource set includes at least one reference signal resource, and different reference signal resources correspond to different beams.

Optionally, determining the trigger event includes: receiving first information, in which the first information indicates the trigger event.

Optionally, the trigger event includes at least one of:
a beam quality of a first beam in the first reference signal resource set being lower than a first threshold;
a beam quality of a second beam in the first reference signal resource set being higher than a second threshold;
a difference between the beam quality of the second beam in the first reference signal resource set and the beam quality of the first beam in the first reference signal resource set being greater than or equal to a third threshold;
at least one of current optimal K beams of the first reference signal resource set being different from optimal K beams of the first reference signal resource set reported in a last beam report by the terminal, K being a positive integer;
current optimal K beams of the first reference signal resource set not including optimal K beams of the first reference signal resource set reported in a last beam report;
current optimal K beams of the first reference signal resource set not including a beam recently indicated by a network device;
current optimal K beams of the first reference signal resource set not including a beam recently activated by a network device;
a difference between a beam quality of an i-th beam top ranked currently in the first reference signal resource set and a beam quality of a j-th beam top ranked in the first reference signal resource set reported in a last beam report being greater than or equal to a fourth threshold, i and j being positive integers, i being less than or equal to K, j being less than or equal to K; or
a difference between a beam quality of a worst beam currently in the first reference signal resource set and a beam quality of a worst beam in the first reference signal resource set reported in a last beam report being greater than or equal to a fifth threshold.

Optionally, the first beam is a beam reported by the terminal in the last beam report and/or a beam used by the terminal; and the second beam is a candidate beam.

Optionally, the first beam includes at least one of: an optimal beam in the last beam report; a beam recently indicated by the network device; a beam recently activated by the network device; all beams in the last beam report; or a worst beam in the last beam report. The second beam includes at least one of: a non-optimal beam in the last beam report; a beam other than beams in the last beam report; a beam other than the beam recently indicated by the network device; or a beam other than at least one beam recently activated by the network device.

Optionally, determining the trigger event includes any one of:
receiving a first signaling, in which the first signaling is used for configuring the trigger event; or
receiving a first signaling and a second signaling, in which the first signaling is used for configuring at least one trigger event, and the second signaling is used for activating or triggering the trigger event among the at least one trigger event configured by the first signaling.

Optionally, receiving the first signaling and the second signaling includes: receiving the first signaling and the second signaling; in which the first signaling is used for configuring at least one of: at least one association relationship, an association identifier (ID) corresponding to an association relationship, a beam reporting type, a beam reporting manner, or beam group-related information; in which the association relationship includes an association relationship among the first reference signal resource set, a trigger event corresponding to the first reference signal resource set, and a beam measurement quantity corresponding to the first reference signal resource set; and the second signaling indicates the association ID to activate or trigger the trigger event configured by the first signaling.

Optionally, association relationships corresponding to different first reference signal resource sets are independently configurable.

Optionally, the method further includes: determining, by the terminal, a beam reporting manner and/or beam group-related information, and reporting, by the terminal, the beam reporting manner and/or the beam group-related information to a network device.

Optionally, the beam reporting type includes: semi-persistent reporting; or aperiodic reporting.

Optionally, the beam reporting manner includes: group based beam reporting; or non-group based beam reporting.

Optionally, a beam group includes at least two beams, and the beam group-related information indicates a usage of the at least two beams in the beam group, the usage including at least one of: the at least two beams being used for the terminal to simultaneously perform uplink transmission; or the at least two beams being used for the terminal to simultaneously perform downlink reception.

Optionally, the method further includes: in a case where the trigger event is satisfied, reporting at least one beam report.

Optionally, the method further includes: in a case where multiple beam reports are reported, determining a time interval between two adjacent beam reports; and reporting the multiple beam reports based on the time interval.

Optionally, the beam report includes at least one of: a beam quality of a beam corresponding to a serving cell of the terminal; or a beam quality of a beam corresponding to a cell other than the serving cell of the terminal.

Optionally, the beam reporting manner is group based beam reporting, and the beam report includes at least one of: second information, in which the second information indicates a number of reported beam groups; a resource identifier of a reference signal resource corresponding to a beam in each reported beam group; or a beam quality of a beam in each reported beam group.

Optionally, the beam reporting manner is non-group based beam reporting, and the beam report includes: a beam quality of a beam corresponding to a reference signal resource in the first reference signal resource set.

Optionally, reference signal resources corresponding to different beams in the beam group belong to different first reference signal resource sets.

Optionally, the method further includes: receiving third information, in which the third information is used for configuring a first request, and the first request is used for requesting a first resource, the first resource being used for carrying a beam report; and sending the first request.

Optionally, the third information is further used for configuring first requests corresponding to different first reference signal resource sets, in which the first requests corresponding to different first reference signal resource sets are used for requesting first resources corresponding to the different first reference signal resource sets, the first resources corresponding to the different first reference signal resource sets are used for carrying beam reports of the different first reference signal resource sets, and the first resources corresponding to the different first reference signal resource sets are different or same.

For a detailed description of step 3201, reference may be made to the description in the above embodiments.

In the present implementation or embodiments, in the absence of contradiction, each step may be implemented independently, arbitrarily combined, or interchanged in order, and optional manners or optional examples may be arbitrarily combined, and may be arbitrarily combined with any steps of other implementations or other embodiments.

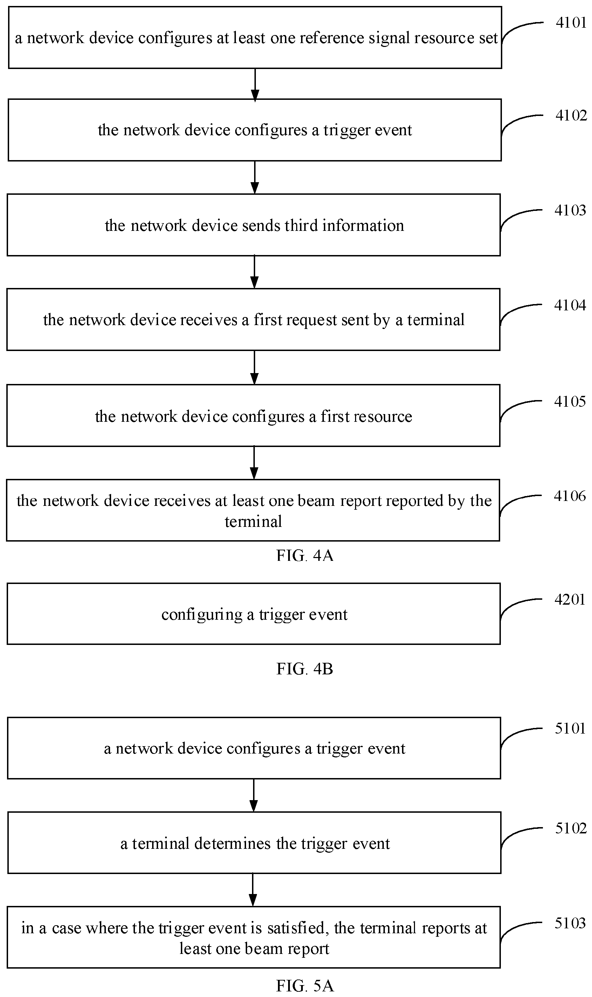

FIG. 4A is an interaction schematic diagram of a determination method according to an embodiment of the present disclosure. As shown in FIG. 4A, an embodiment of the present disclosure relates to a determination method for a network device. The method includes:
Step 4101: a network device configures at least one reference signal resource set.
Step 4102: the network device configures a trigger event.
Step 4104: the network device sends third information.
Step 4105: the network device receives a first request sent by a terminal.
Step 4106: the network device configures a first resource.
Step 4106: the network device receives at least one beam report reported by the terminal.

For a detailed description of steps 4101-4106, reference may be made to the content of the above embodiments.

The determination method involved in embodiments of the present disclosure may include at least one of steps S4101 to S4106. For example, step S4101 may be implemented as an independent embodiment, and step S4102 may be implemented as an independent embodiment, but is not limited to this.

In the present implementation or embodiments, in the absence of contradiction, each step may be implemented independently, arbitrarily combined, or interchanged in order, and optional manners or optional examples may be arbitrarily combined, and may be arbitrarily combined with any steps of other implementations or other embodiments.

FIG. 4B is an interaction schematic diagram of a determination method according to an embodiment of the present disclosure. As shown in FIG. 4B, an embodiment of the present disclosure relates to a determination method for a network device. The method includes:
Step 4201: a trigger event is configured.

Optionally, the trigger event is used for triggering a beam report corresponding to a first reference signal resource set, in which the network device configures at least one reference signal resource set for a terminal, and the first reference signal resource set is one or more of the at least one reference signal resource set.

Optionally, different reference signal resource sets correspond to different control resource set (CORESET) pool indexes, or different reference signal resource sets correspond to different transmission reception points (TRPs).

Optionally, the reference signal resource set includes at least one reference signal resource, and different reference signal resources correspond to different beams.

Optionally, configuring the trigger event includes: sending first information, in which the first information indicates the trigger event.

Optionally, the trigger event includes at least one of:
a beam quality of a first beam in the first reference signal resource set being lower than a first threshold;
a beam quality of a second beam in the first reference signal resource set being higher than a second threshold;
a difference between the beam quality of the second beam in the first reference signal resource set and the beam quality of the first beam in the first reference signal resource set being greater than or equal to a third threshold;
at least one of current optimal K beams of the first reference signal resource set being different from optimal K beams of the first reference signal resource set reported in a last beam report by the terminal, K being a positive integer;
current optimal K beams of the first reference signal resource set not including optimal K beams of the first reference signal resource set reported in a last beam report;
current optimal K beams of the first reference signal resource set not including a beam recently indicated by a network device;
current optimal K beams of the first reference signal resource set not including a beam recently activated by a network device;
a difference between a beam quality of an i-th beam top ranked currently in the first reference signal resource set and a beam quality of a j-th beam top ranked in the first reference signal resource set reported in a last beam report being greater than or equal to a fourth threshold, i and j being positive integers, i being less than or equal to K, j being less than or equal to K; or
a difference between a beam quality of a worst beam currently in the first reference signal resource set and a beam quality of a worst beam in the first reference signal resource set reported in a last beam report being greater than or equal to a fifth threshold.

Optionally, the first beam is a beam reported by the terminal in the last beam report and/or a beam used by the terminal; and the second beam is a candidate beam.

Optionally, the first beam includes at least one of: an optimal beam in the last beam report; a beam recently indicated by the network device; a beam recently activated by the network device; all beams in the last beam report; or a worst beam in the last beam report. The second beam includes at least one of: a non-optimal beam in the last beam report; a beam other than beams in the last beam report; a beam other than the beam recently indicated by the network device; or a beam other than at least one beam recently activated by the network device.

Optionally, configuring the trigger event includes any one of:
sending a first signaling, in which the first signaling is used for configuring the trigger event; or
sending a first signaling and a second signaling, in which the first signaling is used for configuring at least one trigger event, and the second signaling is used for activating or triggering a trigger event among the at least one trigger event configured by the first signaling.

Optionally, sending the first signaling and the second signaling includes: sending the first signaling and the second signaling; in which the first signaling is used for configuring at least one of: at least one association relationship, an association identifier (ID) corresponding to an association relationship, a beam reporting type, a beam reporting manner, or beam group-related information; in which the association relationship includes an association relationship among the first reference signal resource set, a trigger event corresponding to the first reference signal resource set, and a beam measurement quantity corresponding to the first reference signal resource set; and the second signaling indicates the association ID to activate or trigger the trigger event configured by the first signaling.

Optionally, association relationships corresponding to different first reference signal resource sets are independently configurable.

Optionally, the method further includes: receiving, from the terminal, a beam reporting manner and/or beam group-related information reported by the terminal.

Optionally, the beam reporting type includes: semi-persistent reporting; or aperiodic reporting.

Optionally, the beam reporting manner includes: group based beam reporting; or non-group based beam reporting.

Optionally, a beam group includes at least two beams, and the beam group-related information indicates a usage of the at least two beams in the beam group, the usage including at least one of: the at least two beams being used for the terminal to simultaneously perform uplink transmission; or the at least two beams being used for the terminal to simultaneously perform downlink reception.

Optionally, the method further includes: receiving at least one beam report from the terminal.

Optionally, the method further includes: configuring, for the terminal, a time interval between two adjacent beam reports.

Optionally, the beam report includes at least one of: a beam quality of a beam corresponding to a serving cell of the terminal; or a beam quality of a beam corresponding to a cell other than the serving cell of the terminal.

Optionally, the beam reporting manner is group based beam reporting, and the beam report includes at least one of: second information, in which the second information indicates a number of reported beam groups; a resource identifier of a reference signal resource corresponding to a beam in each reported beam group; or a beam quality of a beam in each reported beam group.

Optionally, the beam reporting manner is non-group based beam reporting, and the beam report includes: a beam quality of a beam corresponding to a reference signal resource in the first reference signal resource set.

Optionally, reference signal resources corresponding to different beams in the beam group belong to different first reference signal resource sets.

Optionally, the method further includes: sending third information, in which the third information is used for configuring a first request, and the first request is used for requesting a first resource, the first resource being used for carrying a beam report; and receiving the first request.

Optionally, the third information is further used for configuring first requests corresponding to different first reference signal resource sets, in which the first requests corresponding to different first reference signal resource sets are used for requesting first resources corresponding to the different first reference signal resource sets, the first resources corresponding to the different first reference signal resource sets are used for carrying beam reports of the different first reference signal resource sets, and the first resources corresponding to the different first reference signal resource sets are different or the same.

For a detailed description of step 4201, reference may be made to the description in the above embodiments.

In the present implementation or embodiments, in the absence of contradiction, each step may be implemented independently, arbitrarily combined, or interchanged in order, and optional manners or optional examples may be arbitrarily combined, and may be arbitrarily combined with any steps of other implementations or other embodiments.

FIG. 5A is an interaction schematic diagram of a determination method according to an embodiment of the present disclosure. As shown in FIG. 5A, an embodiment of the present disclosure relates to a determination method for a communication system, the communication system including a terminal and a network device. The method includes at least one of:
Step 5101: a network device configures a trigger event;
Step 5102: a terminal determines the trigger event;
Step 5103: in a case where the trigger event is satisfied, the terminal reports at least one beam report.

For optional implementations of steps 5101-5103, reference may be made to the description in the above embodiments.

In some embodiments, the above method may include the methods described in the embodiments of the communication system side, the terminal side, the network device side, etc., which are not described again here.

The determination method involved in embodiments of the present disclosure may include at least one of steps S5101 to S5103. For example, step S5101 may be implemented as an independent embodiment, and step S5102 may be implemented as an independent embodiment, but is not limited to this.

In the present implementation or embodiments, in the absence of contradiction, each step may be implemented independently, arbitrarily combined, or interchanged in order, and optional manners or optional examples may be arbitrarily combined, and may be arbitrarily combined with any steps of other implementations or other embodiments.

The following is an illustrative introduction to the above method.

A terminal receives indication information, in which the indication information indicates a trigger event, and the trigger event is used for triggering a beam report corresponding to a first reference signal resource set, in which the terminal is configured with two reference signal resource sets for beam measurement and reporting.

a) Different reference signal resource sets correspond to different CORESET pool indexes, or correspond to different TRPs. Different TRPs may all correspond to a serving cell, or some of the different TRPs belong to a serving cell, and some belong to a cell different from the serving cell, such as a neighbor cell.

The trigger event includes at least one of the following:
a) A beam quality of a current beam in the first reference signal resource set being lower than a threshold.
   i) The current beam is defined as:
      an optimal beam in a last report, or a beam recently indicated by a base station, or all beams activated by a base station MAC CE, or all beams in a last report, or a worst beam in a last report.
b) A beam quality of a candidate beam in the first reference signal resource set being higher than a threshold.
   i) The candidate beam is defined as: a non-optimal beam in a last report, a beam other than beams included in a last report, or a beam other than a beam recently indicated by a base station, or a beam other than at least one beam recently activated by a base station MAC CE.
c) A beam quality of a candidate beam in the first reference signal resource set being higher than a beam quality of a current beam by an offset.
   i) The definitions of the current beam and the candidate beam are the same as above. That is, the beam qualities of beams corresponding to reference signal resources within the same reference signal resource set are compared.
d) At least one of optimal K beams in the first reference signal resource set being different from optimal K beams in a last report, or the optimal K beams not including best beams in the last report, or the optimal K beams not including a beam recently indicated by a base station, or the optimal K beams not including a beam recently activated by a base station MAC CE.
   i) Further, a difference in beam quality between best beams in two reports is above an offset.
   ii) Or a difference in beam quality between worst beams in two reports is above an offset.
e) In the above, the beam quality of a beam includes L1-RSRP or L1-SINR.

The indication information includes at least one of the following:
a) RRC signaling configures a trigger event, and thresholds, offsets, etc. related to the trigger event. Then, the terminal reports when the trigger event is satisfied.
b) Or, RRC signaling configures a trigger event, and related thresholds, offsets, etc., and then, after further activation by a MAC CE or indication by a DCI, the terminal reports when the trigger event is satisfied.
   i) Specifically, during RRC configuration, an association relationship may also be configured, such as an association relationship among a trigger event and related thresholds or offsets, a reference signal resource or resource set (including CMR and/or IMR, the reference signal resource may be a periodically, semi-persistently, or aperiodically transmitted reference signal resource), a reported measurement quantity (L1-RSRP or L1-SINR), a reporting type (semi-persistent or aperiodic reporting), a reporting manner (whether it is group-based beam reporting, used for simultaneous uplink transmission and/or simultaneous downlink reception; this may be configured by a base station, or reported by the terminal itself), and an associated ID. Then, a MAC CE or a DCI directly activates or indicates the ID. In the case of DCI indication, the CSI request field may be directly reused or extended.
   ii) In the above, for different reference signal resource sets, the RRC configuration parameters may be independently configured.

After the trigger condition is satisfied, one or multiple reports may be reported, and a time interval between reports is configured.

A beam report may include beam values of a serving cell or of a cell other than the serving cell, such as a neighbor cell, and the physical cell identifier (PCI) thereof is configured to the terminal.
a) When the beam report includes a measurement result of a neighbor cell, it may be non-group-based reporting or group-based beam reporting.
b) In the case of group-based beam reporting, two beams included in a group are two beams that the terminal supports for simultaneous transmission and/or simultaneous reception, and the two beams within a group come from different reference signal resource sets, i.e., from different TRPs.
c) In the case of non-group-based beam reporting, a beam report triggered based on the first reference signal resource set includes only beams corresponding to the first reference signal resource set, i.e., includes only beams from one TRP.

A group-based beam report includes at least one of the following:
a) at least one group;
b) two reference signal resource identifiers included in each group;
c) an L1-RSRP or L1-SINR corresponding to each reference signal identifier.

The terminal receives another indication information, in which the indication information is used for determining configuration information of a scheduling request (SR), and the SR is used for requesting a PUSCH resource for carrying a beam report. For different reference signal resource sets, i.e., corresponding to different CORESET pool indexes or different TRPs, the SR resources may be different. That is, multiple SR resources are configured for requesting beam reporting resources for different reference signal resource sets.

In the present disclosure, by defining trigger conditions for TRP-specific event-triggered beam report, accuracy and timeliness of TRP-based beam report are ensured, while signaling overhead is reduced.

Embodiments of the present disclosure further provide an apparatus for implementing any of the above methods. For example, an apparatus is provided, which includes units or modules for implementing the steps performed by the terminal in any of the above methods. For another example, another apparatus is provided, which includes units or modules for implementing the steps performed by the network device (e.g., an access network device, a core network function node, a core network device, etc.) in any of the above methods.

It should be understood that the division of units or modules in the above apparatus is only a division of logical functions, and in actual implementation, all or part of the units or modules may be integrated into one physical entity, or may be physically separated. In addition, the units or modules in the apparatus may be implemented in the form of a processor invoking software. For example, the apparatus includes a processor, the processor is connected to a memory, the memory stores instructions, and the processor invokes the instructions stored in the memory to implement any of the above methods or to implement functions of the units or modules of the above apparatus, in which the processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of a hardware circuit, and functions of some or all of the units or modules may be implemented by designing the hardware circuit. The above hardware circuit may be understood as one or more processors. For example, in an implementation, the above hardware circuit is an application-specific integrated circuit (ASIC), and functions of some or all of the units or modules are implemented by designing the logical relationships of components within the circuit. For another example, in another implementation, the above hardware circuit may be implemented by a programmable logic device (PLD). Taking a field programmable gate array (FPGA) as an example, it may include a large number of logic gate circuits, and the connection relationships between the logic gate circuits are configured by a configuration file, to implement functions of some or all of the above units or modules. All units or modules of the above apparatus may be implemented entirely in the form of a processor invoking software, or entirely in the form of a hardware circuit, or partially in the form of a processor invoking software and the remainder in the form of a hardware circuit.

In embodiments of the present disclosure, a processor is a circuit with signal processing capability. In an implementation, the processor may be a circuit with instruction reading and execution capability, such as a central processing unit (CPU), a microprocessor, a graphics processing unit (GPU) (which may be understood as a microprocessor), or a digital signal processor (DSP). In another implementation, the processor may implement certain functions through logical relationships of a hardware circuit, and the logical relationships of the hardware circuit are fixed or reconfigurable. For example, the processor is a hardware circuit implemented by an application-specific integrated circuit (ASIC) or a programmable logic device (PLD), such as an FPGA. In a reconfigurable hardware circuit, the process in which the processor loads a configuration document to implement the hardware circuit configuration may be understood as the process in which the processor loads instructions to implement functions of some or all of the above units or modules. In addition, a hardware circuit designed for artificial intelligence, which may be understood as an ASIC, such as a neural network processing unit (NPU), a tensor processing unit (TPU), or a deep learning processing unit (DPU), may also be used.

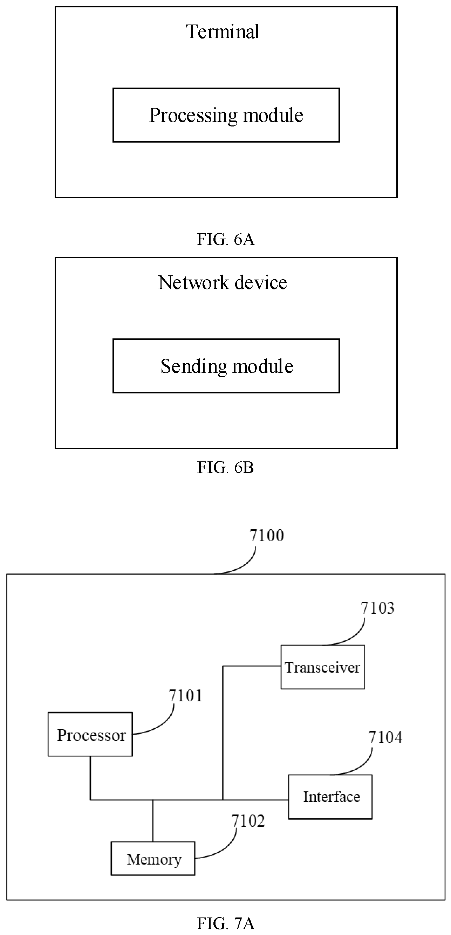

FIG. 6A is a schematic block diagram of a terminal according to an embodiment of the present disclosure. As shown in FIG. 6A, the terminal includes:

a processing module configured to determine a trigger event, the trigger event being used for triggering a beam report corresponding to a first reference signal resource set, in which the terminal is configured with at least one reference signal resource set, and the first reference signal resource set is one or more of the at least one reference signal resource set.

Optionally, the processing module is configured to perform steps related to "processing" performed by the terminal in any of the above methods. The terminal further includes at least one of a sending module and a receiving module. The sending module is configured to perform steps related to "sending" performed by the terminal in any of the above methods. The receiving module is configured to perform steps related to "receiving" performed by the terminal in any of the above methods, and details are not described again here.

FIG. 6B is a schematic block diagram of a network device according to an embodiment of the present disclosure. As shown in FIG. 6B, the network device includes:
a sending module configured to configure a trigger event, the trigger event being used for triggering a beam report corresponding to a first reference signal resource set, in which a terminal is configured with at least one reference signal resource set, and the first reference signal resource set is one or more of the at least one reference signal resource set.

Optionally, the sending module is configured to perform steps related to "sending" performed by the network device in any of the above methods. The network device may further include at least one of a receiving module and a processing module. The receiving module is configured to perform steps related to "receiving" performed by the network device in any of the above methods. The processing module is configured to perform steps related to "processing" performed by the network device in any of the above methods.

FIG. 7A is a schematic block diagram of a communication device 7100 according to an embodiment of the present disclosure. The communication device 7100 may be a network device (e.g., an access network device, a core network device, etc.), or a terminal (e.g., a user equipment, etc.), or a chip, a chip system, a processor, etc. that supports the network device in implementing any of the above methods, or a chip, a chip system, a processor, etc. that supports the terminal in implementing any of the above methods. The communication device 7100 may be used to implement the methods described in the above method embodiments, and for details, reference may be made to the descriptions in the above method embodiments.

As shown in FIG. 7A, the communication device 7100 includes one or more processors 7101. The processor 7101 may be a general-purpose processor or a special-purpose processor, for example, may be a baseband processor or a central processing unit. The baseband processor may be used to process communication protocols and communication data, and the central processing unit may be used to control a communication device (e.g., a base station, a baseband chip, a terminal device, a terminal device chip, a DU, or a CU, etc.), execute programs, and process data of the programs. The processor 7101 is configured to invoke instructions to cause the communication device 7100 to perform any of the above methods.

In some embodiments, the communication device 7100 further includes one or more memories 7102 for storing instructions. Optionally, all or part of the memory 7102 may also be located outside the communication device 7100.

In some embodiments, the communication device 7100 further includes one or more transceivers 7103. When the communication device 7100 includes one or more transceivers 7103, the communication steps such as sending and receiving in the above methods are performed by the transceiver 7103, and the other steps are performed by the processor 7101.

In some embodiments, a transceiver may include a receiver and a transmitter, and the receiver and the transmitter may be separate or integrated. Optionally, terms such as transceiver, transceiver unit, transceiver machine, and transceiver circuit may be interchanged; terms such as transmitter, transmitting unit, transmitting machine, and transmitting circuit may be interchanged; and terms such as receiver, receiving unit, receiving machine, and receiving circuit may be interchanged.

Optionally, the communication device 7100 further includes one or more interface circuits 7104. The interface circuit 7104 is connected to the memory 7102. The interface circuit 7104 may be used to receive signals from the memory 7102 or other devices, and may be used to send signals to the memory 7102 or other devices. For example, the interface circuit 7104 may read instructions stored in the memory 7102 and send the instructions to the processor 7101.

The communication device 7100 described in the above embodiments may be a network device or a terminal, but the scope of the communication device 7100 described in the present disclosure is not limited to this, and the structure of the communication device 7100 may not be limited by FIG. 7A. The communication device may be an independent device or may be part of a larger device. For example, the communication device may be: (1) an independent integrated circuit (IC), or a chip, or a chip system or subsystem; (2) a set of one or more ICs, optionally, the set of ICs may also include a storage component for storing data and programs; (3) an ASIC, such as a modem; (4) a module that may be embedded in other devices; (5) a receiver, a terminal device, a smart terminal device, a cellular phone, a wireless device, a handset, a mobile unit, a vehicle-mounted device, a network device, a cloud device, an artificial intelligence device, etc.; (6) others, etc.

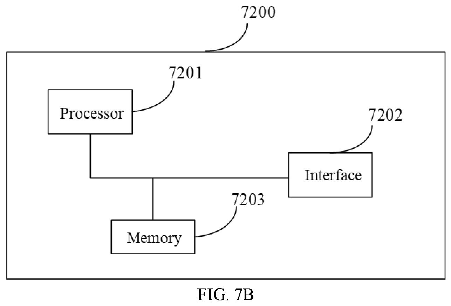

FIG. 7B is a schematic block diagram of a chip 7200 according to an embodiment of the present disclosure. For the case where the communication device 7100 may be a chip or a chip system, reference may be made to the structural schematic diagram of the chip 7200 shown in FIG. 7B, but it is not limited to this.

The chip 7200 includes one or more processors 7201, and the processor 7201 is configured to invoke instructions to cause the chip 7200 to perform any of the above methods.

In some embodiments, the chip 7200 further includes one or more interface circuits 7202. The interface circuit 7202 is connected to a memory 7203. The interface circuit 7202 may be used to receive signals from the memory 7203 or other devices, and may be used to send signals to the memory 7203 or other devices. For example, the interface circuit 7202 may read instructions stored in the memory 7203 and send the instructions to the processor 7201. Optionally, terms such as interface circuit, interface, transceiver pin, and transceiver may be interchanged.

In some embodiments, the chip 7200 further includes one or more memories 7203 for storing instructions. Optionally, all or part of the memory 7203 may be located outside the chip 7200.

The present disclosure further provides a storage medium. The storage medium stores instructions. When the instructions are executed on the communication device 7100, the communication device 7100 is caused to perform any of the above methods. Optionally, the storage medium is an electronic storage medium. Optionally, the storage medium is a computer-readable storage medium, but is not limited to this, and may also be a storage medium readable by other devices. Optionally, the storage medium may be a non-transitory storage medium, but is not limited to this, and may also be a transitory storage medium.

The present disclosure further provides a program product. When executed by the communication device 7100, the program product causes the communication device 7100 to perform any of the above methods. Optionally, the program product is a computer program product.

The present disclosure further provides a computer program. When executed on a computer, the computer program causes the computer to perform any of the above methods.

In the above embodiments, all or part of the embodiments may be implemented by software, hardware, firmware, or any combination thereof. When implemented by software, all or part of the embodiments may be implemented in the form of a computer program product. The computer program product includes one or more computer programs. When the computer program is loaded and executed on a computer, all or part of the processes or functions described in embodiments of the present disclosure are generated. The computer may be a general-purpose computer, a special-purpose computer, a computer network, or other programmable apparatus. The computer program may be stored in a computer-readable storage medium or transmitted from one computer-readable storage medium to another computer-readable storage medium. For example, the computer program may be transmitted from one website site, computer, server, or data center to another website site, computer, server, or data center by wire (e.g., coaxial cable, optical fiber, digital subscriber line (DSL)) or wirelessly (e.g., infrared, wireless, microwave, etc.). The computer-readable storage medium may be any available medium that may be accessed by a computer, or a data storage device such as a server or a data center that includes one or more available media integrated therein. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)).

A person of ordinary skill in the art may realize that the units and algorithm steps of the examples described in conjunction with the embodiments disclosed herein may be implemented in electronic hardware, or a combination of computer software and electronic hardware. Whether these functions are performed in hardware or software depends on the specific application and design constraints of the technical solution. A person skilled in the art may use different methods for each specific application to implement the described functions, but such implementation should not be considered beyond the scope of the present disclosure.

A person skilled in the art may clearly understand that, for the convenience and brevity of description, the specific working processes of the systems, apparatuses, and units described above may refer to the corresponding processes in the foregoing method embodiments, and details are not described again here.

The above description is only a specific implementation of the present disclosure, but the scope of protection of the present disclosure is not limited to this. Any person skilled in the art may easily conceive of changes or substitutions within the technical scope disclosed in the present disclosure, which shall be covered by the scope of protection of the present disclosure. Therefore, the scope of protection of the present disclosure shall be subject to the scope of protection of the claims.

## Claims

1. A determination method, performed by a terminal, comprising:
determining a trigger event, the trigger event being used for triggering a beam report corresponding to a first reference signal resource set, wherein the terminal is configured with at least one reference signal resource set, and the first reference signal resource set is one or more of the at least one reference signal resource set.

2. The method according to claim 1, wherein different reference signal resource sets correspond to different control resource set (CORESET) pool indexes, or different reference signal resource sets correspond to different transmission reception points (TRPs).

3. The method according to claim 1 or 2, wherein the reference signal resource set comprises at least one reference signal resource, and different reference signal resources correspond to different beams.

4. The method according to any one of claims 1-3, wherein determining the trigger event comprises:
receiving first information, wherein the first information indicates the trigger event.

5. The method according to any one of claims 1-4, wherein the trigger event comprises at least one of:
a beam quality of a first beam in the first reference signal resource set being lower than a first threshold;
a beam quality of a second beam in the first reference signal resource set being higher than a second threshold;
a difference between the beam quality of the second beam in the first reference signal resource set and the beam quality of the first beam in the first reference signal resource set being greater than or equal to a third threshold;
at least one of current optimal K beams of the first reference signal resource set being different from optimal K beams of the first reference signal resource set reported in a last beam report by the terminal, K being a positive integer;
current optimal K beams of the first reference signal resource set not comprising optimal K beams of the first reference signal resource set reported in a last beam report;
current optimal K beams of the first reference signal resource set not comprising a beam recently indicated by a network device;
current optimal K beams of the first reference signal resource set not comprising a beam recently activated by a network device;
a difference between a beam quality of an i-th beam top ranked currently in the first reference signal resource set and a beam quality of a j-th beam top ranked in the first reference signal resource set reported in a last beam report being greater than or equal to a fourth threshold, i and j being positive integers, i being less than or equal to K, j being less than or equal to K; or
a difference between a beam quality of a worst beam currently in the first reference signal resource set and a beam quality of a worst beam in the first reference signal resource set reported in a last beam report being greater than or equal to a fifth threshold.

6. The method according to claim 5, wherein the first beam is a beam reported by the terminal in the last beam report and/or a beam used by the terminal; and the second beam is a candidate beam.

7. The method according to claim 6, wherein:
the first beam comprises at least one of: an optimal beam in the last beam report; a beam recently indicated by the network device; a beam recently activated by the network device; all beams in the last beam report; or a worst beam in the last beam report; and
the second beam comprises at least one of: a non-optimal beam in the last beam report; a beam other than beams in the last beam report; a beam other than the beam recently indicated by the network device; or a beam other than at least one beam recently activated by the network device.

8. The method according to any one of claims 1-7, wherein determining the trigger event comprises any one of:
receiving a first signaling, wherein the first signaling is used for configuring the trigger event; or
receiving a first signaling and a second signaling, wherein the first signaling is used for configuring at least one trigger event, and the second signaling is used for activating or triggering a trigger event among the at least one trigger event configured by the first signaling.

9. The method according to claim 8, wherein receiving the first signaling and the second signaling comprises:
receiving the first signaling and the second signaling;
wherein the first signaling is used for configuring at least one of: at least one association relationship, an association identifier (ID) corresponding to an association relationship, a beam reporting type, a beam reporting mode, or beam group-related information; wherein the association relationship comprises an association relationship among the first reference signal resource set, a trigger event corresponding to the first reference signal resource set, and a beam measurement quantity corresponding to the first reference signal resource set; and
the second signaling indicates the association ID to activate or trigger the trigger event configured by the first signaling.

10. The method according to claim 9, wherein association relationships corresponding to different first reference signal resource sets are separately configurable.

11. The method according to any one of claims 8-10, further comprising:
determining, by the terminal, a beam reporting mode and/or beam group-related information, and reporting, by the terminal, the beam reporting mode and/or the beam group-related information to a network device.

12. The method according to claim 9 or 10, wherein the beam reporting type comprises:
semi-persistent reporting; or
aperiodic reporting.

13. The method according to any one of claims 9-11, wherein the beam reporting mode comprises:
group based beam reporting; or
non-group based beam reporting.

14. The method according to any one of claims 9-11, wherein a beam group comprises at least two beams, and the beam group-related information indicates a usage of the at least two beams in the beam group, the usage comprising at least one of:
the at least two beams being used for the terminal to simultaneously perform uplink transmission; or
the at least two beams being used for the terminal to simultaneously perform downlink reception.

15. The method according to any one of claims 1-14, further comprising:
in a case where the trigger event is satisfied, reporting at least one beam report.

16. The method according to claim 15, further comprising:
in a case where multiple beam reports are reported, determining a time interval between two adjacent beam reports; and
reporting the multiple beam reports based on the time interval.

17. The method according to claim 15 or 16, wherein the beam report comprises at least one of:
a beam quality of a beam corresponding to a serving cell of the terminal; or
a beam quality of a beam corresponding to a cell other than the serving cell of the terminal.

18. The method according to any one of claims 15-17, wherein the beam reporting mode is group based beam reporting, and the beam report comprises at least one of:
second information, wherein the second information indicates a count of reported beam groups;
a resource identifier of a reference signal resource corresponding to a beam in each reported beam group; or
a beam quality of a beam in each reported beam group.

19. The method according to any one of claims 15-17, wherein the beam reporting mode is non-group based beam reporting, and the beam report comprises: a beam quality of a beam corresponding to a reference signal resource in the first reference signal resource set.

20. The method according to any one of claims 14-19, wherein reference signal resources corresponding to different beams in the beam group belong to different first reference signal resource sets.

21. The method according to any one of claims 1-20, further comprising:
receiving third information, wherein the third information is used for configuring a first request, and the first request is used for requesting a first resource, the first resource being used for carrying a beam report; and
sending the first request.

22. The method according to claim 21, wherein the third information is further used for configuring first requests corresponding to different first reference signal resource sets, wherein the first requests corresponding to different first reference signal resource sets are used for requesting first resources corresponding to different first reference signal resource sets, the first resources corresponding to different first reference signal resource sets are used for carrying beam reports of the different first reference signal resource sets, and the first resources corresponding to different first reference signal resource sets are different or the same.

23. A determination method, performed by a network device, comprising:
configuring a trigger event, the trigger event being used for triggering a beam report corresponding to a first reference signal resource set, wherein the network device configures at least one reference signal resource set for a terminal, and the first reference signal resource set is one or more of the at least one reference signal resource set.

24. The method according to claim 23, wherein different reference signal resource sets correspond to different control resource set (CORESET) pool indexes, or different reference signal resource sets correspond to different transmission reception points (TRPs).

25. The method according to claim 23 or 24, wherein the reference signal resource set comprises at least one reference signal resource, and different reference signal resources correspond to different beams.

26. The method according to any one of claims 23-25, wherein configuring the trigger event comprises:
sending first information, wherein the first information indicates the trigger event.

27. The method according to any one of claims 23-26, wherein the trigger event comprises at least one of:
a beam quality of a first beam in the first reference signal resource set being lower than a first threshold;
a beam quality of a second beam in the first reference signal resource set being higher than a second threshold;
a difference between the beam quality of the second beam in the first reference signal resource set and the beam quality of the first beam in the first reference signal resource set being greater than or equal to a third threshold;
at least one of current optimal K beams of the first reference signal resource set being different from optimal K beams of the first reference signal resource set reported in a last beam report by the terminal, K being a positive integer;
current optimal K beams of the first reference signal resource set not comprising optimal K beams of the first reference signal resource set reported in a last beam report;
current optimal K beams of the first reference signal resource set not comprising a beam recently indicated by a network device;
current optimal K beams of the first reference signal resource set not comprising a beam recently activated by a network device;
a difference between a beam quality of an i-th beam top ranked currently in the first reference signal resource set and a beam quality of a j-th beam top ranked in the first reference signal resource set reported in a last beam report being greater than or equal to a fourth threshold, i and j being positive integers, i being less than or equal to K, j being less than or equal to K; or
a difference between a beam quality of a worst beam currently in the first reference signal resource set and a beam quality of a worst beam in the first reference signal resource set reported in a last beam report being greater than or equal to a fifth threshold.

28. The method according to claim 27, wherein the first beam is a beam reported by the terminal in the last beam report and/or a beam used by the terminal; and the second beam is a candidate beam.

29. The method according to claim 28, wherein:
the first beam comprises at least one of: an optimal beam in the last beam report; a beam recently indicated by the network device; a beam recently activated by the network device; all beams in the last beam report; or a worst beam in the last beam report; and
the second beam comprises at least one of: a non-optimal beam in the last beam report; a beam other than beams in the last beam report; a beam other than the beam recently indicated by the network device; or a beam other than at least one beam recently activated by the network device.

30. The method according to any one of claims 23-29, wherein configuring the trigger event comprises any one of:
sending a first signaling, wherein the first signaling is used for configuring the trigger event; or
sending a first signaling and a second signaling, wherein the first signaling is used for configuring at least one trigger event, and the second signaling is used for activating or triggering a trigger event among the at least one trigger event configured by the first signaling.

31. The method according to claim 30, wherein sending the first signaling and the second signaling comprises:
sending the first signaling and the second signaling;
wherein the first signaling is used for configuring at least one of: at least one association relationship, an association identifier (ID) corresponding to an association relationship, a beam reporting type, a beam reporting manner, or beam group-related information; wherein the association relationship comprises an association relationship among the first reference signal resource set, a trigger event corresponding to the first reference signal resource set, and a beam measurement quantity corresponding to the first reference signal resource set; and
the second signaling indicates the association ID to activate or trigger the trigger event configured by the first signaling.

32. The method according to claim 31, wherein association relationships corresponding to different first reference signal resource sets are independently configurable.

33. The method according to any one of claims 30-32, further comprising:
receiving, from the terminal, a beam reporting manner and/or a beam group-related information reported by the terminal.

34. The method according to claim 31 or 32, wherein the beam reporting type comprises:
semi-persistent reporting; or
aperiodic reporting.

35. The method according to any one of claims 31-33, wherein the beam reporting manner comprises:
group based beam reporting; or
non-group based beam reporting.

36. The method according to any one of claims 31-33, wherein a beam group comprises at least two beams, and the beam group-related information indicates a usage of the at least two beams in the beam group, the usage comprising at least one of:
the at least two beams being used for the terminal to simultaneously perform uplink transmission; or
the at least two beams being used for the terminal to simultaneously perform downlink reception.

37. The method according to any one of claims 23-36, further comprising:
receiving at least one beam report from the terminal.

38. The method according to claim 37, further comprising:
configuring, for the terminal, a time interval between two adjacent beam reports.

39. The method according to claim 37 or 38, wherein the beam report comprises at least one of:
a beam quality of a beam corresponding to a serving cell of the terminal; or
a beam quality of a beam corresponding to a cell other than the serving cell of the terminal.

40. The method according to any one of claims 37-39, wherein the beam reporting manner is group based beam reporting, and the beam report comprises at least one of:
second information, wherein the second information indicates a number of reported beam groups;
a resource identifier of a reference signal resource corresponding to a beam in each reported beam group; or
a beam quality of a beam in each reported beam group.

41. The method according to any one of claims 37-39, wherein the beam reporting manner is non-group based beam reporting, and the beam report comprises: a beam quality of a beam corresponding to a reference signal resource in the first reference signal resource set.

42. The method according to any one of claims 36-41, wherein reference signal resources corresponding to different beams in the beam group belong to different first reference signal resource sets.

43. The method according to any one of claims 23-42, further comprising:
sending third information, wherein the third information is used for configuring a first request, and the first request is used for requesting a first resource, the first resource being used for carrying a beam report; and
receiving the first request.

44. The method according to claim 43, wherein the third information is further used for configuring first requests corresponding to different first reference signal resource sets, wherein the first requests corresponding to different first reference signal resource sets are used for requesting first resources corresponding to different first reference signal resource sets, the first resources corresponding to different first reference signal resource sets are used for carrying beam reports of different first reference signal resource sets, and the first resources corresponding to different first reference signal resource sets are different or the same.

45. A determination method for a communication system, the communication system comprising a terminal and a network device, the method comprising at least one of:
configuring, by the network device, a trigger event, the trigger event being used for triggering a beam report corresponding to a first reference signal resource set, the terminal is configured with at least one reference signal resource set, and the first reference signal resource set is one or more of the at least one reference signal resource set;
determining, by the terminal, the trigger event; and
in a case where the trigger event is satisfied, reporting, by the terminal, at least one beam report.

46. A terminal, comprising:
a processing module configured to determine a trigger event, wherein the trigger event is used for triggering a beam report corresponding to a first reference signal resource set, the terminal is configured with at least one reference signal resource set, and the first reference signal resource set is one or more of the at least one reference signal resource set.

47. A network device, comprising:
a sending module configured to configure a trigger event, wherein the trigger event is used for triggering a beam report corresponding to a first reference signal resource set, the terminal is configured with at least one reference signal resource set, and the first reference signal resource set is one or more of the at least one reference signal resource set.

48. A communication device, comprising:
one or more processors; and
a memory coupled to the one or more processors, the memory storing instructions,
wherein, when the instructions are executed by the one or more processors, the communication device is caused to perform the method according to any one of claims 1 to 22.

49. A communication device, comprising:
one or more processors; and
a memory coupled to the one or more processors, the memory storing instructions,
wherein, when the instructions are executed by the one or more processors, the communication device is caused to perform the method according to any one of claims 23 to 44.

50. A communication system, comprising a terminal and a network device, wherein the terminal is configured to perform the method according to any one of claims 1 to 22, and the network device is configured to perform the method according to any one of claims 23 to 44.

51. A storage medium, storing instructions, wherein when the instructions are executed on a communication device, the communication device is caused to perform the method according to any one of claims 1 to 22.

52. A storage medium, storing instructions, wherein when the instructions are executed on a communication device, the communication device is caused to perform the method according to any one of claims 23 to 44.
